# EUROPÄISCHE PATENTSCHRIFT

(11) **EP 4 359 871 B1**
(45) Veröffentlichungstag und Bekanntmachung des Hinweises auf die Patenterteilung: **19.08.2026**
(21) Anmeldenummer: 23764669.0
(22) Anmeldetag: 07.09.2023
(51) Int. Cl.: G05B 13/04, G05B 19/418

(54) **VERFAHREN ZUM AUSGEBEN VON VORAUSSAGEDATEN EINER VORAUSSAGE ZUMINDEST EINES QUALITÄTSPARAMETERS FÜR ZUMINDEST EINE BAUSTOFFPLATTE**
METHOD FOR OUTPUTTING PREDICTION DATA OF A PREDICTION OF AT LEAST ONE QUALITY PARAMETER FOR AT LEAST ONE BUILDING MATERIAL BOARD
PROCÉDÉ D'ÉMISSION DE DONNÉES PRÉDICTIVES D'UNE PRÉDICTION D'AU MOINS UN PARAMÈTRE DE QUALITÉ POUR AU MOINS UN PANNEAU DE MATÉRIAU DE CONSTRUCTION

(30) Priorität: 13.09.2022 EP 22195366
(43) Veröffentlichungstag der Anmeldung: 01.05.2024
(73) Patentinhaber: Siempelkamp Maschinen- und Anlagenbau GmbH, 47803 Krefeld (DE)
(72) Erfinder: RUSSKAMP, Bernd, 47877 Willich (DE); BERNARDY, Gregor, 53949 Dahlem (DE)
(74) Vertreter: Cohausz & Florack
(86) Internationale Anmeldenummer: PCT/EP2023/074664
(87) Internationale Veröffentlichungsnummer: WO 2024/056527

(56) Entgegenhaltungen:
- WO-A1-2021/165394
- WO-A1-2022/259100
- DIAS RUI CORREIA ET AL: "PREFAB Framework - PRoduct quality towards zEro deFects for melAmine surface Boards industry", vol. 54, no. 1, 1 January 2021 (2021-01-01), DE, pages 570 - 575, XP093404834, ISSN: 2405-8963, Retrieved from the Internet <URL:https://pdf.sciencedirectassets.com/313346/1-s2.0-S2405896321X00079/1-s2.0-S2405896321007898/main.pdf?hash=c09a94eefa2140d79b4a6d3850f1516e522db463cf03656500bec49bd7da8c38&host=68042c943591013ac2b2430a89b270f6af2c76d8dfd086a07176afe7c76c2c61&pii=S2405896321007898&tid=spdf-19927e8f-a641-456b-b0d3-ff9> [retrieved on 20260608], DOI: 10.1016/j.ifacol.2021.08.065
- JÄCKEL MATHIAS ET AL: "Algorithm-based design of mechanical joining processes", PRODUCTION ENGINEERING, CARL HANSER VERLAG, DE, vol. 16, no. 2-3, 5 March 2022 (2022-03-05), pages 285 - 293, XP037801088, ISSN: 0944-6524, [retrieved on 20220305], DOI: 10.1007/S11740-022-01121-2

## Beschreibung

### Gebiet

Beispielhafte Ausführungsformen der Erfindung betreffen Verfahren, Vorrichtungen, Systeme und Computerprogramme insbesondere zum Ausgeben von Voraussagedaten einer Voraussage zumindest eines Qualitätsparameters für zumindest eine Baustoffplatte.

### Hintergrund

Die Veröffentlichung von Mathias Jäckel et al., "Algorithm-based design of mechanical joining processes", PRODUCTION ENGINEERING, CARL HANSER VERLAG, DE, Bd. 16, Nr. 2-3, 5. März 2022 (2022-03-05), Seiten 285-293, XP037801088, ISSN: 0944-6524, DOI: 10.1007/S11740-022-01121-2 offenbart algorithmenbasierte Prozessmodelle für bestimmte Stanznietverfahren ("mechanical joining process self-pierce riveting with semitubular rivet (SPR-ST)"), wobei Prozessdaten für Stahl- und Aluminiumverbindungen für ein Training und eine Bewertung verschiedener Vorhersagealgorithmen verwendet werden.

WO 2021/165394 A1 offenbart die Herstellung von Werkstoffplatten, wobei eine Steuerung mit KI-Algorithmus Eingangsparameter wie Material-, Anlagen- und Produktdaten auswertet und Qualitätswerte ermittelt. Die Steuerung überprüft deren Einhaltung und kann Optimierungen simulieren.

Die kontinuierliche Herstellung von Werkstoff- und/oder Baustoffplatten, beispielsweise von Holzwerkstoffplatten umfasst üblicherweise eine Verwendung von komplexen Produktionsanlagen, die eine Mehrzahl von Einheiten oder Abschnitten umfassen, die für jeweilige Produktionsschritte vorgesehen sind. Für jede solcher Einheiten kann eine - üblicherweise große - Anzahl von Prozessparametern jeweilige Prozessbedingungen charakterisieren. So können beispielsweise im Falle einer Faserplattenerzeugung die Prozessparameter Quetschwassermenge, Hackschnitzelmenge, Kochertemperatur, etc. kennzeichnend für Prozessbedingungen eines Prozessabschnitts der Zerfaserung einer Produktionsanlage zum Herstellen von Holzwerkstoffplatten sein.

Hierbei haben solche Prozessparameter Einfluss auf Qualitätsmerkmale von unter den entsprechenden Produktionsbedingungen produzierten Baustoffplatten, beispielsweise auf eine Querzugfestigkeit, eine Rohdichte, eine Biegefestigkeit, etc.

Angesichts einer üblicherweise sehr großen Anzahl von Prozessparametern, die Prozessbedingungen einer Produktionsanlage zur Herstellung von Baustoffplatten kennzeichnen können, hat es sich als vorteilhaft herausgestellt, mathematische Modelle zu verwenden, die einen Zusammenhang zwischen ausgewählten Prozessparametern und resultierenden Qualitätsmerkmalen beschreiben. Solche Modelle können helfen, einen Einfluss von eingestellten und/oder gemessenen Soll- oder Istwerten von Prozessparametern auf zu erwartende Qualitätsmerkmale zu berechnen, und im Falle einer produzierenden Produktionsanlage aufgrund vorliegender Soll- oder Istwerte von Prozessparametern entsprechende Qualitätsmerkmale vorauszusagen. Entsprechende Voraussagewerte können einem Bediener basierend auf vorliegenden Soll- oder Istwerten von Prozessparametern angezeigt werden, so dass der Bediener der Produktionsanlage mit entsprechenden Einstellungen der Produktionsanlage reagieren kann, um zu erwartende Qualitätsmerkmale geeignet einzustellen.

Es hat sich aber herausgestellt, dass es vorteilhaft ist, wenn mathematische Modelle zum Voraussagen von Qualitätsmerkmalen spezifisch für einen zu produzierenden Plattentyp erzeugt werden. Aufgrund einer relativ hohen Anzahl an für eine Erzeugung eines mathematischen Modells für einen Baustoffplattentyp notwendigen Baustoffplattenproben (auch als Laborproben bezeichnet) kann dies im Falle von Baustoffplattentypen, deren Anteil an einer Gesamtproduktion niedrig ist, allerdings dazu führen, dass für solche Baustoffplattentypen ein entsprechendes mathematisches Modell erst nach vergleichsweise langer Zeit, wenn genug Probedatensätze erhalten worden sind, zur Verfügung steht.

Es hat sich auch herausgestellt, dass, nachdem ein mathematisches Modell für einen Baustoffplattentyp erstellt wurde, sich Voraussagen durch dieses mathematische Modell im Laufe der Zeit, beispielsweise in Abhängigkeit der Jahreszeit, verschlechtern können.

Es ist vor diesem Hintergrund insbesondere eine Aufgabe der vorliegenden Erfindung, Verfahren, Vorrichtungen, Systeme und Computerprogramme insbesondere zum Ausgeben von Voraussagedaten, die eine Voraussage zumindest eines Qualitätsparameters zumindest einer Baustoffplatte repräsentieren, bereitzustellen, auch wenn ein Produktionsanteil für den Baustoffplattentyp der Baustoffplatte gering im Verhältnis zu einer Gesamtproduktion ist. Zusätzlich ist es eine Aufgabe der vorliegenden Erfindung, insbesondere für solche Baustoffplattentypen, Verfahren, Vorrichtungen, Systeme und Computerprogramme bereitzustellen, die verlässliche Voraussagedaten ausgeben. Eine weitere Aufgabe der vorliegenden Erfindung ist es, Verfahren, Vorrichtungen, Systeme und Computerprogramme bereitzustellen, die eine Steuerung einer Produktionsanlage zum Herstellen von Baustoffplatten unterstützen.

### Zusammenfassung einiger beispielhafter Ausführungsformen der Erfindung

Die Aufgabe der vorliegenden Erfindung wird durch den Gegenstand der unabhängigen Ansprüche gelöst. Vorteilhafte Ausführungsformen sind in den abhängigen Ansprüchen beschrieben.

Gemäß einem Aspekt der Erfindung wird ein Verfahren zum Ausgeben von Voraussagedaten einer Voraussage zumindest eines Qualitätsparameters für zumindest eine Baustoffplatte offenbart, wobei das Verfahren durch zumindest eine Steuervorrichtung einer Produktionsanlage zum Herstellen von Baustoffplatten ausgeführt wird, wobei die Produktionsanlage zumindest einen Sensor und/oder eine Messeinrichtung aufweist, der und/oder die eingerichtet ist/sind, zumindest einen Sensormesswert und/oder einen Messwert der Messeinrichtung als Soll- oder Istwert eines entsprechenden Prozessparametes auszugeben, der eine entsprechende Prozessbedingung beim Herstellen der Baustoffplatte durch die Produktionsanlage charakterisiert, das Verfahren umfassend:
- Bereithalten eines mathematischen Modells für eine Verwendung beim Herstellen zumindest einer Baustoffplatte, wobei das mathematische Modell einen Satz von Modellkoeffizienten für eine oder mehrere mathematische Gleichungen umfasst, wobei die eine mathematische Gleichung oder die mehreren mathematischen Gleichungen basierend auf einer Eingabe von Werten aus zumindest einem Prozessparameterdatensatz, der Werte für Prozessparameter mit zugehörigem Zeitstempel umfasst, einen zu erwartenden Wert für zumindest einen Qualitätsparameter ausgeben kann oder können, und wobei das mathematische Modell auf einer Anzahl von Trainingsdatensätzen basiert, die einer Mindestanzahl entspricht, oder die größer als diese Mindestanzahl ist;
- wobei ein Trainingsdatensatz für einen Baustoffplattentyp Qualitätsparameterdaten umfasst, die zumindest einen Wert für zumindest ein entsprechendes Qualitätsmerkmal einer Baustoffplattenprobe des Baustoffplattentyps repräsentieren, und Prozessparameterdaten, die Werte für eine Mehrzahl von Prozessparametern eines Produktionsverfahrens zum Herstellen der Baustoffplattenprobe repräsentieren;
- wobei die Anzahl von Trainingsdatensätzen zumindest einen Trainingsdatensatz für einen Baustoffplattentyp der zumindest einen Baustoffplatte umfasst, wobei das Verfahren weiter umfasst:
- Erhalten von Voraussagedaten basierend auf dem mathematischen Modell und basierend auf zumindest einem Sensormesswert und/oder zumindest einem Messwert der Messeinrichtung, wobei die Voraussagedaten eine Voraussage zumindest eines Qualitätsparameters für die zumindest eine Baustoffplatte repräsentieren;

wobei das Erhalten der Voraussagedaten umfasst:
   - Verwenden des zumindest einen erhaltenen Sensormesswerts und/oder des zumindest einen erhaltenen Messwerts der Messeinrichtung als Eingangsgröße oder als Eingangsgrößen für das mathematische Modell, und
   - Berechnen der Voraussagedaten mittels des mathematischen Modells basierend auf der Eingangsgröße oder den Eingangsgrößen;
wobei das Verfahren weiter umfasst:
   - Ausgeben der Voraussagedaten.

Gemäß diesem genannten Aspekt der Erfindung werden des Weiteren offenbart:
- Eine Steuervorrichtung für eine Produktionsanlage zum Herstellen von Baustoffplatten umfassend einen Prozessor, einen Programmspeicher, einen Arbeitsspeicher, einen Nutzdatenspeicher, eine oder mehrere Kommunikationsschnittellen, eine Erfassungseinheit zur Erfassung von Ist- oder Sollwerten für einen oder mehrere Prozessparameter und eine Benutzerschnittstelle, wobei die Steuervorrichtung eingerichtet ist zur Ausführung des Verfahrens gemäß dem genannten Aspekt der Erfindung;
- Eine Produktionsanlage zum Herstellen von Baustoffplatten umfassend zumindest eine Steuervorrichtung nach dem genannten Aspekt, und einen Sensor und/oder eine Messeinrichtung, der und/oder die eingerichtet ist/sind, zumindest einen Sensormesswert und/oder einen Messwert der Messeinrichtung als Soll- oder Istwert eines entsprechenden Prozessparameters auszugeben.
- Ein Computerprogramm, umfassend Programmanweisungen, die eine Steuervorrichtung gemäß dem genannten Aspekt zur Ausführung des Verfahrens gemäß dem genannten Aspekt der Erfindung veranlassen, wenn das Computerprogramm auf dem Prozessor der Steuervorrichtung gemäß dem genannten Aspekt ausgeführt wird. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium kann beispielsweise ein gegenständliches oder körperliches Speichermedium sein.

Im Folgenden werden Eigenschaften des genannten Aspekts - teilweise beispielhaft - beschrieben.

In beispielhaften Ausführungsformen kann das Verfahren gemäß dem genannten Aspekt der Erfindung, von zumindest einer Steuervorrichtung ausgeführt werden, die mit einer Produktionsanlage zum Herstellen von Baustoffplatten (direkt und/oder indirekt), insbesondere zum Steuern von zumindest Teilen eines Herstellungsverfahrens für Baustoffplatten, verbunden ist. In einer beispielhaften Ausführungsform kann das Verfahren von einem System ausgeführt werden, das beispielsweise mehrere Steuervorrichtungen umfasst, wobei jede der Steuervorrichtungen (einige oder alle) Schritte des Verfahrens ausführt. Beispielsweise kann eine Steuervorrichtung eine Verarbeitungsanlage wie einen (oder mehrere) Computer umfassen, der (oder die) an der Produktionsanlage vorgesehen ist (oder sind) (und beispielsweise Sensordaten und/oder Daten von einer oder mehrerer Messeinrichtungen der Produktionsanlage über drahtgebundene und/oder drahtlose Kommunikationsverbindungen empfangen kann) und/oder eine mobile Vorrichtung wie ein Tablet-Computer, ein Smartphone, o.ä. die eingerichtet ist, zumindest Teile des Verfahrens durchzuführen, und die beispielsweise über eine drahtlose Kommunikationsverbindung mit der Verarbeitungsanlage und/oder der Produktionsanlage verbunden ist. Wie weiter in der vorliegenden Spezifikation offenbart, kann das Verfahren gemäß dem genannten Aspekt bei einem und/oder zum Steuern zumindest von Teilen einer Produktionsanlage zum Herstellen von zumindest einer Baustoffplatte verwendet werden, oder kann das Verfahren ein solches Steuern zumindest unterstützen.

Die Herstellung von Baustoffplatten, die in Fachkreisen teilweise auch einfach "Werkstoffplatten" genannt werden, findet entweder taktgebunden oder kontinuierlich statt. Bei einer taktgebundenen Herstellung werden die Baustoffplatten als flächenförmige Gegenstände mit in allen drei Raumrichtungen endlichen Abmaßen erzeugt, während die Baustoffplatten die in einem kontinuierlichen Prozess erzeugt werden, Ablängungen einer lediglich in zwei Raumrichtungen endliche Abmaße aufweisenden Bahnware darstellen. Dabei gibt die Arbeitsweise der Füge- und/oder Verdichtungseinheit vor, ob der Gesamtprozess als taktgebundenes oder kontinuierliches Verfahren beschrieben wird, da im Falle einer sogenannten taktgebundenen Herstellungsweise die die der Verdichtung vorgelagerten Prozessabschnitte, wie beispielsweise die Streuung, häufig ebenfalls als kontinuierliche Teilprozesse ausgelegt sind. Da in den Verdichtungseinheiten, respektive den kombinierten Füge- und Verdichtungseinheiten im Allgemeinen bei der Baustoffplattenerzeugung auch mit nennenswerten Drücken gearbeitet wird, werden diese Einheiten vom Fachmann meist mit Bezug auf eine Gesamtanlage als "Pressenteil" bezeichnet. Bei der Erzeugung von Baustoffplatten i.S.d. vorliegenden Schrift liegen die Arbeitsdrücke hier, abhängig von Material und Größe der zu erzeugenden Werkstoffplatte, meist in Bereichen zwischen etwa 50 N/cm² und ca. 500 N/cm² und dort vorteilhafterweise zwischen 100 N/cm² und 400 N/cm², wenngleich sie im Bereich der Erzeugung von zur Dämmung dienenden Baustoffplatten, so genannten Dämmplatten, bei sehr geringen Dichten auch geringer als 50 N/cm² ausfallen können.

Sowohl in wirtschaftlicher Hinsicht, wie im Hinblick auf ihre technische Einsatzfähigkeit nehmen wenigstens eine, einen naturbasierten Faseranteil aufweisende, Schicht aufweisende Baustoffplatten, unter den Baustoffplatten einen besonderen Stellenwert ein. Unter naturbasierten Fasern bzw. Faseranteilen werden im Sinne der vorliegenden Schrift Fasern und Faseranteile verstanden, die einen natürlichen Ursprung haben, also dem Ursprung nach einer Einjahrespflanze oder einer Mehrjahrespflanze entstammen, unabhängig davon, ob die Fasern oder Faseranteile als reine Fasern bspw. zur Produktion von MDF- / HDF-Platten oder deren Schichttypen vorliegen oder Bestandteile von Spänen, Langspänen oder Wafern bilden, die klassischerweise zur Produktion von Span- oder OSB-Platten oder deren Schichttypen dienen. Der im Weiteren auch verwendete Begriff "Holzpartikel" beinhaltet also stets wenigstens naturbasierte Fasern oder Faseranteile.

Derartige Baustoffplatten werden vom Fachmann häufig auch einfach "Holz-Baustoffplatten" genannt, selbst wenn sie eine oder weitere Schichten aufweisen, die nicht auf einem, aus einer Mehrjahrespflanze gewonnenem Rohmaterial basieren. Selbst Baustoffplatten, die lediglich eine oder mehrere Schichten umfassen, die wenigstens anteilig aus, aus Einjahrespflanzen gewonnenen Fasern und/oder Faseranteilen bestehen, werden meist Holz-Baustoffplatten und nur äußerst selten ganz korrekt als "Bast- oder Gras-Baustoffplatten" bezeichnet.

Solche Holz-Baustoffplatten werden in den unterschiedlichsten Ausführungsformen für unterschiedliche Anwendungszwecke hergestellt. Besonders weit verbreitet sind Spanplatten, OSB-Platten und MDF- (Mitteldichte Faserplatten) oder HDF-Platten (Hochdichte Faserplatten), sowie aus einzelnen Schichten derartiger Verbunde aufgebaute Hybridplatten. Die Benennung der Baustoffplatten hängt dabei von Form und Größe der zum Platten- respektive zum Schichtaufbau verwendeten Fasern bzw. Partikel ab. Von einer Spanplatte spricht der Fachmann, wenn diese aus "feinen" Holzpartikeln erzeugt wird, von einer OSB-Platte dagegen, wenn diese aus "groben" Holzpartikeln erzeugt ist. Unter "feinen" Holzpartikeln versteht der Fachmann im Allgemeinen Partikel, deren maximale Ausdehnung in einer Raumrichtung nicht 60 mm überschreitet, meist werden diese als Späne beschriebenen Partikel sogar mit einer maximalen Ausdehnung von höchsten 25 mm oder gar 20 mm ausgebildet. Unter "groben" Holzpartikeln versteht der Fachmann im Allgemeinen Partikel, deren maximale Ausdehnung in einer Raumrichtung mindestens 60 mm beträgt, meist werden diese als Langspäne beschriebenen Partikel sogar mit einer maximalen Ausdehnung von höchsten 60 mm bis 185 mm, insbesondere von 80 mm bis 140 mm ausgebildet.

MDF- und HDF-Platten, beziehungsweise deren einzelne Schichten, sind dagegen aus (mitteldicht- oder hochdicht verpressten) Fasern gebildet, die meist unter Zwischenschaltung eines chemischen Prozesses, meist einer Art Kochprozess, aus dem Rohmaterial gewonnen werden.

Hybridplatten bestehen aus mehreren Schichten unterschiedlicher Arten und sind häufig dann besonders gut geeignet, wenn die Werkstoffplatte für ihren Einsatzzweck verschiedenen Anforderungen gerecht werden muss.

Derartige Baustoffplatten werden auch dann noch als Holz-Baustoffplatten bezeichnet, wenn sie einzelne Schichten umfassen, die keine Anteile von naturbasierten Fasern und/oder Faseranteilen aufweisen. Meist handelt es sich dann um kaschierte Baustoffplatten, also Holz-Baustoffplatten, die einseitig oder beidseitig außen kaschiert sind. Zur Kaschierung finden meist Kunststoffe Anwendung. Besonders bekannt sind dabei so genannte beschichtete Spanplatten.

Die genannten Arten und Typen von Holz-Baustoffplatten werden also aus Holzpartikeln (Spänen, Langspänen oder Fasern) unterschiedlicher Form und Größe hergestellt, wobei die Holzpartikel durch Stimulierung eigener Adhäsionsmechanismen und Zugabe von Klebstoffen (i.d.R. eines Leimes) im sogenannten Pressenteil einer Baustoffplattenerzeugungsanlage unter Einwirkung von Druck und Temperatur verbunden werden.

In jüngerer Zeit ist man bestrebt neben den zum Nachwachsen viele Jahre benötigenden Holzwerkstoffen auch Einjahrespflanzen, insbesondere grasartige Pflanzen, zur Produktion von Baustoffplatten zu benutzen. Diese Einjahrespflanzen haben den großen Vorteil des schnellen Wachstums. Somit ist ihre Verwendung besonders Ressource schonend, und passt besser in das sich weltweit vermehrt ausbildende Umweltbewusstsein. Zudem erfordert der zunehmende Wohlstand in vielen, beispielsweise asiatischen Ländern, die Deckung eines großen Bedarfs an Baustoffplatten für den Wohnungsbau, insbesondere den Wohnungsinnenausbau oder auch für den Möbelbau.

Da Einjahrespflanzen nicht verrinden, bilden ihre Ernteprodukte produktionstechnisch betrachtet zunächst einen homogenes Rohmaterial, dessen Fasern für die Baustoffplattenproduktion durch einen Aufspleißungsprozess gewonnen werden können.

Allerdings gestaltet sich die Verarbeitung von Einjahrespflanzen deutlich komplizierter als die auf Holzpartikeln basierenden Baustoffplatten. So bildet die hohe Ausscheidung von im Herstellungsprozess abrasiv auf den Anlagenbau wirkender Silikate ein großes Hemmnis. Dies erfordert insbesondere hinsichtlich des Anlagebaus deutlich erhöhten Aufwand, beispielsweise durch zusätzliche Prozessschritte, der Armierung bestimmter Anlageteile und einem erhöhten Ersatzteilbedarf. Zudem besteht die Gefahr von Produktionsstillständen.

Nicht zuletzt unterscheiden sich insbesondere auch die mechanischen Eigenschaften von aus Einjahrespflanzen hergestellten Partikeln basierenden Platten(-schichten) zu denjenigen aus auf Holzpartikeln basierenden Pendants erheblich.

Aus der Vielzahl der aufeinander aufbauenden Prozessabschnitte, der Varianz der Anforderungen an die einzelnen Prozessabschnitte abhängig von den herzustellenden Baustoffplattentypen und deren gewünschter Eigenschaften, sowie der innerhalb eines Prozessabschnitts auf die Qualität der zu erzeugenden Baustoffplatte einwirkenden Parametern ergeben sich beinahe beliebig komplexe Abhängigkeitsstrukturen.

Ein Baustoff, aus dem die genannten Baustoffplatten hergestellt werden, umfasst in beispielhaften Ausführungsformen einen Holzwerkstoff, einen Dämmstoff, und/oder einen oder mehrere Rohstoffe wie Reisstroh, Bagasse, Bambus, Hanf, Ölpalme. Beispielhafte Baustoffplatten umfassen Spanplatten, Grobspan-, bzw. OSB-Platten und/oder MDF-Platten.

Im Sinne der vorliegenden Offenbarung sind unter dem Begriff Baustoffplatten Platten zu verstehen, die beispielsweise zumindest einen großen Anteil (zum Beispiel mehr als 25 Gew.-%) an zumindest einem der genannten Baustoffe enthalten, im Falle von Holzwerkstoffplatten beispielsweise zumindest einen großen Anteil (zum Beispiel mehr als 50 Gew.-%, insbesondere mehr als 75 Gew.-%, beispielsweise wenigstens 80 Gew.-%) an zellulosehaltigem, beispielsweise lignozellulosehaltigem, Material, beispielsweise Holzspäne, aufweisen. Solche Baustoffplatten können weitere Materialien wie Kunststoffmaterialien umfassen, die beispielsweise zumindest teilweise in Partikel- und/oder Faserform vorliegen können.

Eine Produktionsanlage zur Herstellung von Baustoffplatten kann somit insbesondere eine Produktionsanlage zur Herstellung von Holzwerkstoffplatten (oder Holz-Ersatz-Baustoffplatten) umfassen. Solche Produktionsanlagen umfassen üblicherweise mehrere Produktionseinheiten oder -Abschnitte, beispielsweise einen Abschnitt (beispielsweise einen Bunker) zum Lagern, Entrinden und/oder Hacken, einen Abschnitt zur Hackschnitzelwäsche, einen Abschnitt zur Zerfaserung und/oder Zerspanung und Beleimung, einen Abschnitt zur Faser- und/oder Spantrocknung, einen Abschnitt zur Mattenformung, und/oder einen Abschnitt zur Heißverpressung.

Produktionsbedingungen insbesondere bei einzelnen Abschnitten und/oder Einheiten der Produktionsanlage können durch entsprechende Prozessparameter charakterisiert werden/sein. Hierbei versteht sich, dass Prozessparameter im Sinne der vorliegenden Offenbarung insbesondere Istwerten und/oder Sollwerten entsprechen. So weist die Produktionsanlage in beispielhaften Ausführungsformen zumindest einen Sensor und/oder zumindest eine Messeinrichtung auf. Beispielsweise kann die Produktionsanlage ein oder mehrere Drucksensoren, Temperatursensoren und/oder Feuchtigkeitssensoren aufweisen. Die Produktionsanlage kann weiter beispielsweise eine oder mehrere Messeinrichtungen zum Vermessen von Eigenschaften der Baustoffplatten, beispielsweise zum Vermessen von Eigenschaften von Holzspänen umfassen. Es versteht sich aber, dass die vorliegende Offenbarung nicht auf solche Sensoren und/oder Messeinrichtungen beschränkt ist. Insbesondere weist die Produktionsanlage zumindest einen Produktionsabschnitt auf, der zumindest einen Sensor aufweist. Beispielsweise kann ein Pressabschnitt einen Drucksensor aufweisen, wobei entsprechende Druckmesswerte dem Prozessparameter Druck entsprechen können. Alternativ oder zusätzlich kann ein eingestellter Sollwert des Drucks am entsprechenden Pressabschnitt dem Prozessparameter Druck entsprechen.

Mit anderen Worten wird das Verfahren in einer beispielhaften Ausführungsform durch eine Steuervorrichtung einer Produktionsanlage oder durch ein System, das eine solche Steuervorrichtung umfasst, ausgeführt, wobei die Produktionsanlage zumindest einen Sensor und/oder zumindest eine Messeinrichtung aufweist, der, bzw. die eingerichtet ist, zumindest einen Sensormesswert und/oder einen Messwert der zumindest einen Messeinrichtung als Soll- oder Istwert eines entsprechenden Prozessparametes auszugeben, und der eine entsprechende Prozessbedingung beim Herstellen der Baustoffplatte durch die Produktionsanlage charakterisiert.

Beispielhafte, die vorliegende Offenbarung nicht einschränkende Prozessparameter insbesondere des Abschnitts zur Zerfaserung und Beleimung können eine Quetschwassermenge, eine Dampfzugabe eines Kochers, ein Füllstand des Kochers, eine Temperatur des Kochers, ein Dampfdruck des Kochers, eine Kochzeit mit dem Kocher, eine Hackschnitzelmenge, eine Paraffinzugabe, etc., umfassen. Beispielhafte, die vorliegende Offenbarung nicht einschränkende Prozessparameter insbesondere des Abschnitts zur Mattenformung können eine Faseraustragsmenge, eine Streuhöhe, eine Formbandgeschwindigkeit, ein Flächengewicht der Matte, eine Mattenfeuchte, eine Streubreite, ein Vorpressdruck, eine Vorpressdistanz, eine Besäumungsbreite, eine Mattendichte, eine Sprühwassermenge, etc., umfassen. Es versteht sich, dass für weitere Einheiten und/oder Abschnitte einer Produktionsanlage eigene Prozessparameter existieren, die entsprechende Produktionsbedingungen dieser weiteren Einheiten und/oder Abschnitte charakterisieren.

Die Produktionsbedingungen, die bei einer Produktionsanlage zum/beim Herstellen einer Baustoffplatte herrschen/eingestellt sind, haben zumindest teilweise einen Einfluss auf Eigenschaften der produzierten Baustoffplatte. Solche Eigenschaften einer Baustoffplatte können insbesondere durch Qualitätsmerkmale, bzw. Qualitätsparameter, charakterisiert werden. Im Sinne der vorliegenden Offenbarung können Qualitätsmerkmale, bzw. Qualitätsparameter, insbesondere eine Querzugfestigkeit, eine Rohdichte, eine Biegefestigkeit und/oder eine Dickenquellung umfassen, wobei diese Beispiele nicht als einschränkend zu verstehen sind. So können weitere Qualitätsmerkmale, bzw. Qualitätsparameter, vorgesehen sein.

Eine Produktionsanlage kann über geeignete Sensoren und/oder Messeinrichtungen an verschiedenen Produktionsabschnitten verfügen, so dass Produktionsbedingungen beim Herstellen einer Baustoffplatte an den verschiedenen Produktionsabschnitten festgehalten werden können, und einer produzierten Baustoffplatte zugeordnet werden können. So können Sensordaten und/oder Messdaten einer Messeinrichtung mit einem entsprechenden Zeitstempel einer produzierten Baustoffplatte zugeordnet als Datensatz gespeichert werden. Solche zeitlich zugeordneten Datensätze/Datenvektoren enthalten die Prozessbedingungen oder Prozesszustände, unter denen die entsprechende Baustoffplatte entstanden ist.

In regelmäßigen Zeitabschnitten werden typischerweise produzierte Baustoffpatten nach einem abgeschlossenem Produktionsprozess der produzierten Baustoffpatten oder Teile davon ausgeschleust, um für diese ausgeschleusten Baustoffplatten entsprechende Qualitätsmerkmale, bzw. Qualitätsparameter, beispielsweise in einem Labor oder durch einen Testroboter zu vermessen. Auf diese Weise können Probedatensätze erhalten werden, die für eine Baustoffplattenprobe (ganze Patte oder Teil davon) eines entsprechenden Baustoffplattentyps Qualitätsparameterdaten und entsprechende Prozessparameterdaten umfassen. Diese Probedatensätze liefern somit einen tatsächlichen Zusammenhang zwischen eingestellten/herrschenden Prozessbedingungen an entsprechenden Abschnitten der Produktionsanlage, die durch die zeitlich zugeordneten Prozessparameterdaten repräsentiert werden, und resultierenden Qualitätsmerkmalen der Baustoffplatte, die unter diesen Prozessbedingungen hergestellt wurde. Aufgrund dieser darin enthaltenen Informationen, können die Probendatensätze als Trainingsdatensätze für ein mathematisches Modell zur Verwendung bei der Herstellung von Baustoffplatten des entsprechenden Baustoffplattentyps verwendet werden, und werden im Folgenden als Trainingsdatensätze bezeichnet.

Dementsprechend umfasst gemäß dem genannten Aspekt der vorliegenden Erfindung ein Trainingsdatensatz für einen Baustoffplattentyp Qualitätsparameterdaten, die zumindest einen Wert (z.B. einen Messwert, der für eine entsprechende Baustoffplattenprobe in einem Labor gemessen wurde) für zumindest ein entsprechendes Qualitätsmerkmal einer Baustoffplattenprobe des Baustoffplattentyps repräsentieren, und Prozessparameterdaten, die Werte (oder Prozessparameterwerte, z.B. einen oder mehrere Soll- oder Istwerte für jeweils einen Prozessparameter, z.B. erhalten durch einen entsprechenden Sensor, eine entsprechende Messeinrichtung, und/oder durch eine entsprechende Einstelleinrichtung der Produktionsanlage) für eine Mehrzahl von Prozessparametern eines Produktionsverfahrens zum Herstellen der Baustoffplattenprobe repräsentieren.

Dabei umfassen die Prozessparameterdaten in beispielhaften Ausführungsformen jeweilige Zeitstempel oder es sind den Prozessparameterdaten jeweilige Zeitstempel zugeordnet (beispielsweise in Zuordnung mit den Prozessparameterdaten gespeichert), die einem entsprechenden Prozessparameter zugeordnet sind. Mit anderen Worten können die Prozessparameter der Mehrzahl von Prozessparametern in beispielhaften Ausführungsformen zeitlich zugeordneten Prozessparameterwerten entsprechen, die einen Zeitstempel umfassen. Der Zeitstempel entspricht dem Zeitpunkt, für den ein Prozessparameterwert eine Prozessbedingung charakterisiert, die während der Produktion einer produzierten Baustoffplatte vorlag.

In beispielhaften Ausführungsformen umfasst das Verfahren einen Schritt des Bereithaltens (z.B. des Speicherns) zumindest eines Trainingsdatensatzes auf einem Speichermedium, das mit der Produktionsanlage verbunden ist, oder für eine Verbindung mit der Produktionsanlage vorgesehen ist, und auf das die zumindest eine Steuervorrichtung zugreifen kann.

Basierend auf den Trainingsdatensätzen ist es möglich, den Herstellungsprozess eines Baustoffplattentyps für eine Produktionsanlage zu modellieren. In beispielhaften Ausführungsformen kann es beispielsweise möglich sein, insbesondere für mehrere Trainingsdatensätze den Prozessparametern entsprechende Koeffizienten oder Gewichte eines mathematischen Modells zuzuordnen, und diese in entsprechenden Gleichungssystemen des mathematischen Modells basierend auf den gemessenen Qualitätsmerkmalen zu bestimmen. Dies kann sukzessive für immer weitere Trainingsdatensätze erfolgen (beispielsweise immer, wenn neue Probedatensätze als Trainingsdatensätze während des Produktionsverlaufs aus Labormessungen erhalten werden), so dass das mathematische Modell mit weiteren Trainingsdatensätze "lernt" und so "trainiert" werden kann. Wie erwähnt, werden dementsprechend Probedatensätze, die zum Trainieren eines mathematischen Modells verwendet werden (auf denen das mathematische Modell basiert), hierin als Trainingsdatensätze bezeichnet.

Wie erwähnt, umfasst das Verfahren gemäß dem genannten Aspekt der vorliegenden Erfindung ein Bereithalten eines mathematischen Modells für eine Verwendung beim Herstellen zumindest einer Baustoffplatte (beispielsweise einer Serie von mehreren Baustoffplatten eines entsprechenden Baustoffplattentyps), wobei das mathematische Modell auf einer Anzahl von Trainingsdatensätzen, insbesondere für den Baustoffplattentyp der Baustoffplatte, die hergestellt wird und/oder die Teil der Serie von Baustoffplatten ist, die hergestellt werden, basiert, die einer Mindestanzahl entspricht, oder die größer als diese Mindestanzahl ist.

In beispielhaften Ausführungsformen umfasst ein mathematisches Modell einen Satz von Modellkoeffizienten für eine oder mehrere mathematische Gleichungen. Insbesondere umfasst in beispielhaften Ausführungsformen ein mathematisches Modell einen Satz von Modellkoeffizienten für eine oder mehrere mathematische Gleichungen, wobei die eine mathematische Gleichung oder die mehreren mathematischen Gleichungen mit den Modellkoeffizienten so vorgesehen sind, dass die eine mathematische Gleichung oder die mehreren mathematischen Gleichungen, basierend auf einer Eingabe von Werten aus zumindest einem Prozessparameterdatensatz, der Werte für Prozessparameter mit zugehörigem Zeitstempel umfasst, einen Wert (einen zu erwartenden Wert) für zumindest einen Qualitätsparameter ausgeben kann oder können.

Mit anderen Worten können beispielsweise während der Herstellung von Baustoffplatten eingestellte und/oder gemessene Soll- und/oder Istwerte von Prozessparametern der Produktionsanlage an die zumindest eine Steuervorrichtung übermittelt werden, die dazu über geeignete Kommunikationsverbindungen mit der Produktionsanlage verbunden ist. Mit den so erhaltenen Werten der Prozessparameter kann die zumindest eine Steuervorrichtung mittels des mathematischen Modells Voraussagewerte für Qualitätsmerkmale berechnen, die für die gerade produzierten Baustoffplatten aufgrund der eingestellten und/oder gemessenen Soll- und/oder Istwerten zu erwarten sind. Entsprechend umfasst das Verfahren gemäß dem genannten Aspekt ein Erhalten von Voraussagedaten basierend auf dem mathematischen Modell, wobei die Voraussagedaten eine Voraussage zumindest eines Qualitätsparameters für die zumindest eine Baustoffplatte (der Baustoffplatte, die hergestellt wird und/oder die Teil der Serie von Baustoffplatten ist, die hergestellt werden) repräsentieren.

Hierbei umfasst in einer beispielhaften Ausführungsform das Erhalten der Voraussagedaten ein Berechnen der Voraussagedaten durch und/oder an der zumindest einen Steuervorrichtung, beispielsweise durch einen oder mehrere Prozessoren und/oder durch eine oder mehrere Datenverarbeitungsanlagen. Alternativ oder zusätzlich umfasst das Erhalten der Voraussagedaten in einer beispielhaften Ausführungsform ein Empfangen der Voraussagedaten durch die zumindest eine Steuervorrichtung, beispielsweise von einer mit der Steuervorrichtung zumindest über eine Kommunikationsverbindung verbundenen Vorrichtung.

Diese Voraussagewerte können einem Bediener der Produktionsanlage angezeigt werden, so dass dieser, falls nötig, über eine Nachjustierung von Prozessparametern Einfluss auf die zu erwartenden Qualitätsmerkmale nehmen kann. Zusätzlich oder alternativ können basierend auf den Voraussagedaten Steuersignale erzeugt werden, basierend auf denen die zumindest eine Steuervorrichtung Prozessparameter zum Herstellen der zumindest einen Baustoffplatte entsprechend nachjustieren kann.

Somit umfasst in einer beispielhaften Ausführungsform das Bereithalten des mathematischen Modells für eine Verwendung beim Herstellen zumindest einer Baustoffplatte, wobei das mathematische Modell auf einer Mindestanzahl von Trainingsdatensätzen basiert ein Speichern, auf einem Speichermedium, das mit der zumindest einen Produktionsanlage verbunden ist und/oder auf das die zumindest eine Produktionsanlage zugreifen kann, von zumindest einem ausgewählt aus:
- zumindest ein Modellkoeffizient für eine oder mehrere mathematische Gleichungen;
- zumindest einen Trainingsdatensatz zum Trainieren und/oder Erzeugen des mathematischen Modells;
- Daten, beispielsweise Programmdaten, die die mathematischen Gleichungen repräsentieren.

Hierbei umfassen in einer beispielhaften Ausführungsform, die Trainingsdatensätze (der Mindestanzahl von Trainingsdatensätzen) auf denen das mathematische Modell basiert, Trainingsdatensätze, die zum Trainieren oder Erzeugen des mathematischen Modells für die Verwendung beim Herstellen der zumindest einen Baustoffplatte verwendet wurden.

Hierbei kann ein mathematisches Modell für eine Verwendung beim Herstellen zumindest einer Baustoffplatte basierend auf einer Anzahl von für den zu produzierenden Baustoffplattentyp vorhandenen (auf einem mit der zumindest einen Steuervorrichtung verbundenen Speichermedium gespeicherten) Trainingsdatensätzen erzeugt werden, wobei das so erzeugte mathematische Modell dann für Voraussagen von zumindest einem Qualitätsparameter der zu produzierenden und/oder in Produktion befindlichen Baustoffplatten verwendet wird. Insbesondere, wenn aus der laufenden Produktion eine oder mehrere Baustoffplatten ausgeschleust werden, im Labor vermessen werden, und somit neue Probendatenätze als Trainingsdatensätze verfügbar werden, kann das mathematische Modell basierend auf den neuen Trainingsdatensätzen aktualisiert werden. Hierfür kann das mathematische Modell basierend auf den zuvor schon vorhandenen Trainingsdatensätzen und den neuen Trainingsdatensätzen erzeugt werden, was innerhalb der vorliegenden Offenbarung auch als Trainieren des mathematischen Modells basierend auf den neuen Trainingsdatensätzen verstanden wird.

Somit umfasst das Verfahren in einer beispielhaften Ausführungsform:
- Erzeugen und/oder trainieren des mathematischen Modells für eine Verwendung beim Herstellen zumindest einer Baustoffplatte basierend auf der Anzahl von Trainingsdatensätzen, die der Mindestanzahl entspricht, oder die größer als diese Mindestanzahl ist.

In beispielhaften Ausführungsformen umfasst das mathematische Modell ein statistisches Modell oder entspricht einem statistischen Modell. Insbesondere liegt in einer beispielhaften Ausführungsform dem mathematischen Modell ein sogenanntes Modell für interdependente simultane stochastische lineare Gleichungen zugrunde. Es hat sich gezeigt, dass zur Modellierung der Produktionsprozesse für Baustoffplatten beispielsweise Regressionsmodelle für interdependente Systeme simultaner (linearer) stochastischer Gleichungen geeignet sein können. Insbesondere die Prozesse in der Holzwerkstoffindustrie können als interdependent und simultan angesehen werden, da mehrere Produkteigenschaften gleichzeitig und nicht unabhängig voneinander entstehen sowie gegenseitige Abhängigkeiten der Einflussgrößen bzw. Prozessparameter untereinander bestehen. Die Modellgleichungen können als linear beschrieben werden, da die Modellkoeffizienten linear eingehen. Es versteht sich aber, dass die vorliegende Offenbarung nicht auf solche linearen Systeme beschränkt ist. Beispielsweise können Prozessparameter auch mit einem quadratischen, kubischen oder exponentiellen (oder anderen) Gewicht einfließen.

Somit umfasst das mathematische Modell in beispielhaften Ausführungsformen ein simultanes Gleichungsmodell, insbesondere ein auf dem Dreistufigen-Kleinste-Quadrate-Verfahren ("Three-stage least squares", "3SLS") basierendes mathematisches Modell. In beispielhaften Ausführungsformen umfasst das mathematische Modell weiter ein auf dem Zweistufigen-Kleinste-Quadrate-Verfahren ("Two-stage least squares", "2SLS") basierendes mathematisches Modell, ein auf dem Partial-Least-Squares (PLS) basierendes mathematisches Modell, und/oder ein lineares Regressionsmodell (Linear Regresssion Model).

Wie erwähnt sind in einer beispielhaften Ausführungsform die Trainingsdatensätze zum Zugriff durch die zumindest eine Steuervorrichtung auf einer Speichereinheit gespeichert (werden bereitgehalten), auf die die zumindest eine Steuervorrichtung zugreifen kann. In beispielhaften Ausführungsformen umfasst das Verfahren gemäß dem genannten Aspekt ein Bereithalten/Speichern der Mehrzahl von Trainingsdatensätze, beispielsweise auf einem Speichermedium mit dem die zumindest eine Steuervorrichtung verbunden ist und/oder auf das die zumindest eine Steuervorrichtung zugreifen kann. In beispielhaften Ausführungsformen repräsentiert ein Wert eines Prozessparameters eine entsprechende Prozessbedingung eines Produktionsverfahrens zum Herstellen einer Baustoffplatte.

Es versteht sich, dass Daten im Sinne der vorliegenden Offenbarung, beispielsweise die Qualitätsparameterdaten, die Prozessparameterdaten und/oder Daten, die im Folgenden offenbart sind, jedwede Art von Informationen umfassen, die von einer Verarbeitungsvorrichtung, wie von der zumindest einen Steuervorrichtung, einem Prozessor, einem System von einem oder mehreren Prozessoren, und/oder einem oder mehreren Computern, gelesen und/oder verarbeitet werden können, und die insbesondere zu diesem Zweck auf einem Speichermedium gespeichert werden können, das mit der zumindest einen Steuervorrichtung, dem Prozessor, mit dem System von einem oder mehreren Prozessoren, und/oder mit dem einen oder den mehreren Computern geeignet direkt und/oder indirekt (z.B. direkt, drahtgebunden oder drahtlos) verbunden ist.

Wie erwähnt, basiert das mathematische Modell auf einer Anzahl von Trainingsdatensätzen, die einer Mindestanzahl entspricht oder diese übersteigt. Hierbei kann die Mindestanzahl einer Anzahl von Trainingsdatensätzen entsprechen, die groß genug ist, dass ein Trainieren/Erzeugen des mathematischen Modells mit dieser Anzahl von Trainingsdatensätzen ein mathematisches Modell ergibt, das Voraussagewerte für zumindest einen Qualitätsparameter ausgeben kann, deren Güte ein vorbestimmtes Qualitätskriterium erfüllen. Zur Überprüfung, ob Voraussagewerte durch ein mathematisches Modell das vorbestimmte Qualitätskriterium erfüllen, kann beispielsweise ein aufgrund von Prozessparameterwerten eines Probedatensatzes vorausgesagter Wert eines Qualitätskriteriums mit dem tatsächlich gemessenen Wert des Qualitätskriterium aus dem Probedatensatz verglichen werden. Beispielsweise kann das Qualitätskriterium erfüllt sein, wenn ein Absolutwert einer Differenz zwischen dem Voraussagewert und dem tatsächlich gemessenen Wert kleiner oder gleich einem vorbestimmten Wert ist.

Mit anderen Worten entspricht in einer beispielhaften Ausführungsform die Mindestanzahl der Anzahl von Trainingsdatensätzen, für die ein mathematisches Modell, das basierend auf dieser Anzahl von Trainingsdatensätzen trainiert und/oder erzeugt wurde, einen Voraussagewert für zumindest ein Qualitätskriterium ausgeben kann, wobei eine Güte des Voraussagewerts ein vorbestimmtes Qualitätskriterium erfüllt. In einer beispielhaften Ausführungsform liegt die Mindestanzahl von Trainingsdatensätzen zwischen 20 und 100, zwischen 30 und 80, zwischen 35 und 70, und/oder zwischen 40 und 60 für die (ein oder mehrere) Qualitätsparameter, für die basierend auf dem mathematischen Modell Voraussagedaten erhalten werden.

Die Mindestanzahl kann, beispielsweise für ein mathematisches Modell für ein Baustoffplattentyp fest vorgegeben sein, oder kann flexibel, beispielsweise durch eine Benutzereingabe, einstellbar sein. Insbesondere der letztere Fall bietet einem Bediener die Möglichkeit, die Mindestanzahl flexibel einzustellen. In beiden Fällen kann ein Wert für die Mindestanzahl für einen Zugriff durch die zumindest eine Steuervorrichtung auf einem Speichermedium gespeichert sein, das mit der zumindest einen Steuervorrichtung verbunden ist, und/oder auf das die zumindest eine Steuervorrichtung zugreifen kann. Mit anderen Worten umfasst das Verfahren in einer beispielhaften Ausführungsform:
- Erhalten zumindest einer Information, die einen Wert der Mindestanzahl repräsentiert, wobei das Erhalten zumindest eins umfasst von:
- Erhalten (z.B. Empfangen) der zumindest einen Information basierend auf einer Eingabe über eine mit der zumindest einen Vorrichtung (der zumindest einen Steuereinheit) verbundenen Benutzerschnittstelle;
- Zugreifen auf eine mit der zumindest einen Vorrichtung (der zumindest einen Steuereinheit) verbundenen Speichereinheit um die zumindest eine Information zu erhalten;

Gemäß dem genannten Aspekt der vorliegenden Erfindung umfasst die Anzahl von Trainingsdatensätzen, auf denen das mathematische Modell basiert, zumindest einen Trainingsdatensatz für einen (den) Baustoffplattentyp der zumindest einen Baustoffplatte (der Baustoffplatte, die hergestellt wird und/oder die Teil der Serie von Baustoffplatten ist, die hergestellt werden).

Für Baustoffplattentypen, die oft und/oder mit hoher Anzahl produziert werden, deren Anteil an einer Gesamtproduktionsmenge somit entsprechend hoch ist, kann diese Mindestanzahl unter Umständen relativ schnell durch ein Trainieren/Erzeugen des mathematischen Modells basierend auf Trainingsdatensätzen für nur einen Baustoffplattentyp, für den Baustoffplattentyp der oft und/oder mit hoher Anzahl produzierten Baustoffplatter, erreicht werden. Für solche Baustoffplattentypen können aufgrund der hohen Produktionsmenge und einer entsprechend hohen möglichen Anzahl an Baustoffplattenproben, die zur Vermessung an ein Labor gegeben werden können, Probedatensätze mit relativ hoher Frequenz erzeugt werden, wodurch die Mindestanzahl relativ schnell erreicht werden kann.

Die vorliegende Offenbarung umfasst demensprechend eine beispielhafte Ausführungsform gemäß welcher die Anzahl von Trainingsdatensätzen, auf denen das mathematische Modell basiert, Trainingsdatensatz nur für einen (den) Baustoffplattentyp der zumindest einen Baustoffplatte (die hergestellt wird und/oder die Teil der Serie von Baustoffplatten ist, die hergestellt werden) umfasst.

Hierbei versteht sich, dass, solange für einen Baustoffplattentyp die Mindestanzahl noch nicht erreicht ist, und ein mathematisches Modell für diesen Baustoffplattentyp noch nicht bei der Herstellung der entsprechenden Baustoffplatten für eine Voraussage von zu erwartenden Qualitätsparametern verwendet werden kann, die Produktion des Baustoffplattentyps ohne solche Voraussagewerte, basierend auf Erfahrungswerten der Bediener der Produktionsanlage, durchgeführt werden können. Allerdings hat es sich herausgestellt, dass eine Steuerung der Produktionsanlage basierend auf Voraussagewerten durch das mathematische Modell (beispielsweise durch einen Bediener der Anlage aufgrund von angezeigten Voraussagewerten und/oder durch direkte Steuerung der Anlage basierend auf Steuerdaten, die basierend auf den Voraussagedaten erzeugt werden und zum direkten/automatischen/elektronischen Steuern zumindest eines Teils der Produktionsanlage verwendet werden) zu einer Produktion von Baustoffplatten mit erhöhter Effizienz führt.

Es ist somit wünschenswert, ein mathematisches Modell auch bei der Herstellung von Baustoffplatten eines Baustoffplattentyps verwenden zu können, für die beispielsweise aufgrund eines niedrigeren Produktionsanteils an der Gesamtproduktionsmenge der Produktionsanlage die Mindestanzahl an Trainingsdatensätzen noch nicht erreicht wurde. Hier hat es sich herausgestellt, dass es möglich ist, ein mathematisches Modell basierend auf Trainingsdatensätzen zu erzeugen/trainieren, die nur teilweise für den betreffenden Baustoffplattentyp und teilweise für einen anderen Baustoffplattentyp sind. Mit anderen Worten umfasst in einer beispielhaften Ausführungsform die Anzahl von Trainingsdatensätzen den zumindest einen Trainingsdatensatz für den Baustoffplattentyp der zumindest einen Baustoffplatte, und zumindest einen Trainingsdatensatz für zumindest einen anderen Baustoffplattentyp.

Es hat sich herausgestellt, dass dies insbesondere möglich ist, wenn der Baustoffplattentyp des geringen Produktionsanteils mit einem Baustoffplattentyp eines höheren Produktionsanteils gruppiert wird, wenn sich also die Anzahl von Trainingsdatensätzen aus einer Anzahl von Trainingsdatensätzen für den Baustoffplattentyp des geringen Produktionsanteils und einer Anzahl von Trainingsdatensätzen für den Baustoffplattentyp des höheren Produktionsanteils zusammen setzt. Allerdings ist eine Gruppierung auch möglich, und oft sinnvoll, wenn die Produktionsanteile in etwa gleich sind, sich beispielsweise um nicht mehr als 10% unterscheiden. Somit ist in einer beispielhaften Ausführungsform ein Produktionsanteil an einer Gesamtproduktionsmenge von Baustoffplatten des Baustoffplattentyps der zumindest einen Baustoffplatte etwa gleich oder geringer, als ein Produktionsanteil von Baustoffplatten des anderen Baustoffplattentyps. Mit anderen Worten basiert das mathematische Modell in einer beispielhaften Ausführungsform auf einer Anzahl von Trainingsdatensätzen für den Baustoffplattentyp der zumindest einen Baustoffplatte (die hergestellt wird und/oder die Teil der Serie von Baustoffplatten ist, die hergestellt werden), und zumindest auf einer Anzahl von Trainingsdatensätzen für den anderen Baustoffplattentyp, wobei die Anzahl von Trainingsdatensätzen für den Baustoffplattentyp der zumindest einen Baustoffplatte (die hergestellt wird und/oder die Teil der Serie von Baustoffplatten ist, die hergestellt werden) kleiner ist als die Mindestanzahl und/oder kleiner als die Anzahl der Baustoffplatten des anderen Baustoffplattentyps. Hierbei ist die Anzahl von Trainingsdatensätzen insgesamt gleich der oder größer als die Mindestanzahl, d.h. die Anzahl von Trainingsdatensätzen für den Baustoffplattentyp der zumindest einen Baustoffplatte (die hergestellt wird und/oder die Teil der Serie von Baustoffplatten ist, die hergestellt werden) und die Anzahl von Trainingsdatensätzen für den anderen Baustoffplattentyp ergeben in Summe eine Anzahl, die gleich oder größer ist als die Mindestanzahl.

Es hat sich herausgestellt, dass für einen Plattentyp, für den noch nicht genügend Trainingsdatensätze zur Verfügung stehen (deren Anzahl kleiner als die Mindestanzahl ist), eine Gruppierung mit einem Plattentyp, für den genügend Trainingsdatensätze zur Verfügung stehen (deren Anzahl gleich oder größer als die Mindestanzahl ist), insbesondere dann von Vorteil sein kann, wenn sich die Plattentypen zumindest in einer Eigenschaft ähnlich sind. Plattentypen können insbesondere aufgrund ihrer Eigenschaften charakterisiert und/oder klassifiziert werden wobei in beispielhaften Ausführungsformen eine Eigenschaft eines Baustoffplattentyps ausgewählt ist zumindest aus:
- Baustoffplattendicke;
- Baustoffplattenbreite;
- Baustoffplattendichte;
- Art einer Verleimung der Baustoffplatte;
- zumindest einem Material der Baustoffplatte, insbesondere zumindest einer Art eines Leims und/oder einer Art eines Holzmaterials.

Eine Baustoffplatte kann durch eine oder mehrere dieser Eigenschaften charakterisiert sein, wobei entsprechende Parameterwerte für eine oder mehrere dieser Eigenschaften in beispielhaften Ausführungsformen für einen Zugriff durch die zumindest eine Steuervorrichtung bereitgehalten werden, beispielsweise auf einem Speichermedium gespeichert sind, das mit der zumindest einen Steuervorrichtung verbunden ist und/oder auf das die zumindest eine Steuervorrichtung zugreifen kann.

**In** einer beispielhaften Ausführungsform sind sich die Baustoffplattentypen dann in zumindest einer Eigenschaft ähnlich, wenn für die Baustoffplattentypen zumindest ein Parameterwert, der zumindest eine Eigenschaft repräsentiert, ähnlich ist. Dies kann der Fall sein, wenn eine Differenz zwischen Parameterwerten für die beiden Baustoffplatten hinsichtlich der zumindest einen Eigenschaft nicht über einem, beispielsweise vorgegebenen, beispielsweise von einem Bediener festgelegten, Maximalwert ist. Somit ist für den Baustoffplattentyp der zumindest einen Baustoffplatte (die hergestellt wird und/oder die Teil der Serie von Baustoffplatten ist, die hergestellt werden) und für den zumindest einen anderen Baustoffplattentyp ein Wert einer Differenz zwischen zumindest einem Parameterwert, der eine Eigenschaft des Baustoffplattentyps der zumindest einen Baustoffplatte (die hergestellt wird und/oder die Teil der Serie von Baustoffplatten ist, die hergestellt werden) charakterisiert, und zumindest einem entsprechenden Parameterwert, der die entsprechende Eigenschaft des zumindest einen anderen Baustoffplattentyps charakterisiert, gleich einem Maximalwert, oder unterschreitet diesen. Hierbei umfasst in einer beispielhaften Ausführungsform der Wert einen Absolutwert oder Betrag/Absolutbetrag, wobei auch andere Werte, die den Abstand von zwei Parametern kennzeichnen können denkbar sind.

Da es, wie erwähnt, von Vorteil ist, wenn ein mathematisches Modell basierend auf einem zu produzierenden Baustoffplattentyp verwendet wird, ist es von Vorteil, wenn ein Baustoffplattentyp, beispielsweise am Anfang der Produktion einer Serie von Baustoffplatten eines Typs, für die zumindest eine Steuervorrichtung eingestellt werden kann. Demensprechend umfasst das Verfahren in einer beispielhaften Ausführungsform:
- Erhalten (z.B. Empfangen) von Informationen, die den Baustoffplattentyp der zumindest einen Baustoffplatte (die hergestellt wird und/oder die Teil der Serie von Baustoffplatten ist, die hergestellt werden) repräsentieren.

Es versteht sich, dass Informationen im Sinne der vorliegenden Offenbarung, beispielsweise die Informationen, die den Baustoffplattentyp der zumindest einen Baustoffplatte repräsentieren und/oder die Informationen, die im Folgenden offenbart sind, jedwede Art von computerlesbarer und/oder elektronisch lesbarer Information umfassen, die von einer Verarbeitungsvorrichtung, wie von der zumindest einen Steuervorrichtung, einem Prozessor, einem System von einem oder mehreren Prozessoren, und/oder einem oder mehreren Computern, gelesen und/oder verarbeitet werden können.

Die Informationen, die den Baustoffplattentyp der zumindest einen Baustoffplatte (die hergestellt wird und/oder die Teil der Serie von Baustoffplatten ist, die hergestellt werden) repräsentieren werden in einer beispielhaften Ausführungsform basierend auf einer Eingabe über eine Benutzerschnittstelle erhalten. In beispielhaften Ausführungsformen umfasst die Benutzerschnittstelle:
- zumindest eine Tastatur und zumindest einen Bildschirm,
- ein oder mehrere Touchscreens,
- ein oder mehrere Mittel zur Spracheingabe, und/oder
- eine mit der Produktionsanlage verbundene mobile Vorrichtung, beispielsweise ein Smartphone, ein Tablett-Computer, einen Laptop.

In beispielhaften Ausführungsformen ist die Benutzerschnittstelle direkt - drahtgebunden und/oder drahtlos - mit der Produktionsanlage und/oder mit der zumindest einen Steuervorrichtung verbunden und/oder beispielsweise über eine Internetverbindung. In beispielhaften Ausführungsformen umfasst eine Benutzerschnittstelle eine Anzeigevorrichtung wie einen oder mehrere Bildschirme und eine Eingabevorrichtung wie eine oder mehrere Tastaturen, eine Computermaus und/oder eine Eingabe-/Ausgabevorrichtung wie einen oder mehrere Touchscreens. In beispielhaften Ausführungsformen umfasst die zumindest eine Steuervorrichtung eine mobile Vorrichtung wie ein oder mehrere Smartphones, einen oder mehrere Tablett-Computer und/oder einen oder mehrere Laptops, wobei eine Benutzerschnittstelle insbesondere in diesen Ausführungsformen einen oder mehrere Touchscreens einer mobilen Vorrichtung umfasst.

Aufgrund der Daten, die den Baustoffplattentyp der zumindest einen Baustoffplatte repräsentieren, kann die zumindest eine Steuervorrichtung prüfen, ob für den Baustoffplattentyp, der produziert werden soll, ein mathematisches Modell vorhanden ist (z.B. auf einem mit der zumindest einen Steuervorrichtung gespeichert ist), das auf genügend Trainingssätzen (nur für den zu produzierenden Baustoffplattentyp oder in Gruppierung mit einem anderen Baustoffplattentyp) basiert.

Dementsprechend umfasst das Verfahren in einer beispielhaften Ausführungsform:
- Bestimmen, basierend auf den erhaltenen Informationen, die den Baustoffplattentyp der zumindest einen Baustoffplatte repräsentieren, ob ein mathematisches Modell für die Verwendung beim Herstellen der zumindest einen Baustoffplatte vorhanden ist, das auf einer Anzahl von Trainingsdatensätzen basiert, die der Mindestanzahl entspricht, oder größer ist als die Mindestanzahl.

Hierbei versteht sich, dass ein Bestimmen, ob ein mathematisches Modell vorhanden ist, ein Bestimmen umfasst, ob ein solches mathematisches Modell (das auf genügend Trainingsdatensätzen basiert) beispielsweise auf einer Speichereinheit gespeichert ist, die mit der zumindest einen Steuervorrichtung verbunden ist und/oder auf die die zumindest eine Steuervorrichtung zugreifen kann. Hierbei versteht sich weiter, dass Verbindungen im Einklang mit der vorliegenden Offenbarung insbesondere direkte oder indirekte drahtgebundene Kommunikations-Verbindungen (beispielsweise LAN-Verbindungen), und/oder direkte oder indirekte drahtlose Kommunikations-Verbindungen umfassend Funk-Verbindungen wie Bluetooth, NFC, WLAN, 4G oder 5G und/oder Kommunikationsverbindungen über das Internet umfassen. Hierbei können indirekte Verbindungen eine oder mehrere Verbindungen über einen oder mehrere Zwischenknoten umfassen.

Hierbei versteht sich weiter, dass ein Speichern eines mathematischen Modells in beispielhaften Ausführungsformen ein Speichern umfasst von zumindest einem ausgewählt aus:
- zumindest einem Modellkoeffizient für eine oder mehrere mathematische Gleichungen des mathematischen Modells;
- zumindest einen Trainingsdatensatz, zum Trainieren und/oder Erzeugen des mathematischen Modells;
- Daten, beispielsweise Programmdaten, die die mathematischen Gleichungen repräsentieren.

Falls, basierend auf den erhaltenen Informationen, die den Baustoffplattentyp der zumindest einen Baustoffplatte repräsentieren, bestimmt wird, dass ein mathematisches Modell für die Verwendung beim Herstellen der zumindest einen Baustoffplatte vorhanden ist, das auf einer Anzahl von Trainingsdatensätzen basiert, die der Mindestanzahl entspricht, oder größer ist als die Mindestanzahl, umfasst das Verfahren in einer beispielhaften Ausführungsform weiter:
- Bereithalten des mathematischen Modells für die Verwendung beim Herstellen der zumindest einen Baustoffplatte, wenn bestimmt wird (wurde), dass das mathematische Modell für die Verwendung beim Herstellen der zumindest einen Baustoffplatte vorhanden ist.

Andernfalls wird in einer beispielhaften Ausführungsform kein mathematisches Modell bei der Herstellung der zumindest einen Baustoffplatte verwendet.

Mit anderen Worten umfasst in dieser beispielhaften Ausführungsform der Schritt des Bereithaltens eines mathematischen Modells für eine Verwendung beim Herstellen zumindest einer Baustoffplatte ein Bereithalten des mathematischen Modells für die Verwendung beim Herstellen der zumindest einen Baustoffplatte, wenn bestimmt wird (wurde), dass das mathematische Modell für die Verwendung beim Herstellen der zumindest einen Baustoffplatte vorhanden ist.

Wie erwähnt, kann ein für einen Baustoffplattentyp bereitgestelltes mathematisches Modell mit der Zeit unter Umständen Voraussagewerte mit verminderter Güte ausgeben. Solche Veränderungen können ein Resultat beispielsweise von sich ändernden Jahreszeiten, von Veränderungen an Teilen und/oder Materialien der Produktionsanlage, o.ä. sein. Es hat sich aber in vorteilhafter Weise herausgestellt, dass ein Einfluss von solchen eher langfristigen Veränderungen dadurch gemildert werden kann, dass ältere Trainingsdatensätze nicht mehr zum Erzeugen/Trainieren eines mathematischen Modells für eine Verwendung beim Herstellen der zumindest einen Baustoffplatte verwendet werden.

Insbesondere dafür umfasst ein Trainingsdatensatz in einer beispielhaften Ausführungsform einen Zeitstempel und/oder es besteht in dieser beispielhaften Ausführungsform eine Zuordnung zwischen dem Zeitstempel und dem Trainingsdatensatz. Dabei repräsentiert der Zeitstempel einen Zeitpunkt, zu dem die Baustoffplattenprobe hergestellt wurde. Beispielsweise kann dieser Zeitpunkt der Zeitpunkt sein, zu dem die Baustoffplattenprobe von einem längeren, in Produktion befindlichen Baustoffplattenband abgesägt wurde und/oder der Zeitpunkt, zu dem die Baustoffplattenprobe ausgeschleust wurde, um im Labor vermessen zu werden. Hierbei versteht sich, dass der Zeitstempel einen solchen Zeitpunkt repräsentiert, es aber beispielsweise nicht auf den exakten Zahlenwert ankommt. So kann beispielsweise zwischen dem tatsächlichen Zeitpunkt des Ausschleusens und/oder Absägens der Baustoffplattenprobe und dem durch den Zeitstempel angegebenen Zeitwert insbesondere eine feste Zeitdifferenz bestehen. Ein solcher Zeitstempel ermöglicht es, dass Trainingsdatensätze verworfen werden können, wenn sie nicht mehr aktuell sind.

In einer beispielhaften Ausführungsform umfasst das Verfahren weiter ein
- Erhalten von Informationen, die eine Aussage repräsentieren, dass zumindest ein Trainingsdatensatz auf dem das mathematische Modell basiert, einen Zeitstempel umfasst oder diesem zugeordnet ist, der einen Zeitpunkt repräsentiert, der vor einem vorbestimmten Zeitintervall liegt.

Hierbei kann diese Information automatisch von der zumindest einen Steuervorrichtung erhalten werden und/oder basierend auf einer Benutzereingabe erhalten werden. Somit umfasst in einer beispielhaften Ausführungsform das Erhalten der Informationen, die eine Aussage repräsentieren, dass zumindest ein Trainingsdatensatz auf dem das mathematische Modell basiert, einen Zeitstempel umfasst oder diesem zugeordnet ist, der einen Zeitpunkt repräsentiert, der vor einem vorbestimmten Zeitintervall liegt zumindest eins aus:
- Erhalten der Informationen, die die Aussage repräsentieren, dass zumindest ein Trainingsdatensatz auf dem das mathematische Modell basiert, einen Zeitstempel umfasst oder diesem zugeordnet ist, der einen Zeitpunkt repräsentiert, der vor einem vorbestimmten Zeitintervall liegt, basierend auf einer Eingabe über eine Benutzerschnittstelle;
- Bestimmen, ob zumindest ein Trainingsdatensatz auf dem das mathematische Modell basiert, einen Zeitstempel umfasst oder diesem zugeordnet ist, der einen Zeitpunkt repräsentiert, der vor einem vorbestimmten Zeitintervall liegt.

Dementsprechend umfasst das Verfahren in einer beispielhaften Ausführungsform weiter:
- Verwerfen von zumindest einem Trainingsdatensatz aus der Anzahl von Trainingsdatensätzen auf denen das mathematische Modell basiert, wenn der zumindest eine Trainingsdatensatz einen Zeitstempel umfasst und/oder diesem Zeitstempel zugeordnet ist, der einen Zeitpunkt repräsentiert, der vor einem vorbestimmten Zeitintervall liegt.

In einer beispielhaften Ausführungsform umfasst das vorbestimmte Zeitintervall ein Zeitintervall vor dem Start einer Ausführung des Verfahrens und/oder einer Herstellung der zumindest einen Baustoffplatte. Dabei ist das Zeitintervall in einer beispielhaften Ausführungsform in Relation zu dem Start der Ausführung des Verfahrens und/oder zu dem Start der Herstellung der zumindest einen Baustoffplatte bestimmt. Das Zeitintervall kann beispielsweise eine Anzahl von Jahren (beispielsweise 2 Jahre) vor dem Tag, an dem die Herstellung der zumindest einen Baustoffplatte unter Verwendung des mathematischen Modells gestartet wird, betragen. In einer beispielhaften Ausführungsform umfasst das vorbestimmte Zeitintervall somit einen oder mehrere Tage, einen oder mehrere Monate und/oder ein oder mehrere Jahre vor Start der Herstellung der zumindest einen Baustoffplatte unter Verwendung des mathematischen Modells.

In einer beispielhaften Ausführungsform umfasst das Verfahren weiter:
- Erzeugen oder Trainieren des mathematischen Modells für eine Verwendung beim Herstellen der zumindest einen Baustoffplatte basierend auf einer Anzahl von Trainingsdatensätzen, die den verworfenen Trainingsdatensatz nicht enthält.

Dabei umfasst in einer beispielhaften Ausführungsform das Bereithalten des mathematischen Modells für die Verwendung beim Herstellen der zumindest einen Baustoffplatte ein Bereithalten des mathematischen Modells für die Verwendung beim Herstellen der zumindest einen Baustoffplatte, wobei das mathematische Modell auf der Anzahl von Trainingsdatensätzen basiert, die den verworfenen Trainingsdatensatz nicht enthält.

Es wird auf diese Weise in vorteilhaft ermöglicht, dass ältere Trainingsdatensätze nicht mehr zum Trainieren und/oder Erzeugen des mathematischen Modells verwendet werden, wodurch das mathematische Modell aktuell gehalten wird, was wiederum langfristige negative Einflüsse, beispielsweise aufgrund von Jahreszeiten abgemildert werden. Auf diese Weise kann das mathematische Modell insbesondere verlässlichere Voraussagedaten ausgeben.

Wie erwähnt, kann ein mathematisches Modell für eine Verwendung beim Herstellen zumindest einer Baustoffplatte basierend auf einer Anzahl von für den zu produzierenden Baustoffplattentyp vorhandenen (auf einem mit der zumindest einen Steuervorrichtung verbundenen Speichermedium gespeicherten) Trainingsdatensätzen erzeugt werden. Insbesondere, wenn aus der laufenden Produktion eine oder mehrere Baustoffplatten ausgeschleust werden, im Labor vermessen werden, und somit neue Probendatenätze als Trainingsdatensätze verfügbar werden, kann das mathematische Modell basierend auf den neuen Trainingsdatensätzen aktualisiert werden. Ebenso kann das mathematische Modell beispielsweise vor dem Start der Herstellung der zumindest einen Baustoffplatte, also beispielsweise vor Produktionsbeginn einer Serie von Baustoffplatten eines Baustoffplattentyps, aktualisiert werden.

Für solche Aktualisierungsprozesse umfasst das Verfahren in einer beispielhaften Ausführungsform:
- Erhalten von Informationen, die eine Aussage repräsentieren, dass zumindest ein Trainingsdatensatz vorhanden ist (z.B. auf einem Speichermedium gespeichert ist, das mit der zumindest einen Steuervorrichtung verbunden ist und/oder auf das die zumindest eine Steuervorrichtung zugreifen kann), der nicht von der Anzahl von Trainingsdatensätzen umfasst ist, auf denen das mathematische Modell basiert.

Mit anderen Worten ist die zumindest eine Steuervorrichtung in dieser Ausführungsform eingerichtet Information zu erhalten, dass zusätzlich zu den Trainingsdatensätzen, auf denen das mathematische Modell basiert, weitere Trainingsdatensätze vorhanden sind. Dabei wird der Schritt des Erhaltens der Information, dass zumindest ein Trainingsdatensatz vorhanden ist, der nicht von der Anzahl von Trainingsdatensätzen umfasst ist, auf denen das mathematische Modell basiert in einer beispielhaften Ausführungsform vor und/oder während einer Herstellung der zumindest einen Baustoffplatte unter Verwendung des mathematischen Modells ausgeführt.

Wenn die Information erhalten wird, dass zumindest ein Trainingsdatensatz vorhanden ist, der nicht von der Anzahl von Trainingsdatensätzen umfasst ist, auf denen das mathematische Modell basiert, umfasst das Verfahren in einer beispielhaften Ausführungsform:
- Trainieren und/oder Erzeugen des mathematischen Modells basierend auf den Trainingsdatensätzen, die von der Anzahl von Trainingsdatensätzen umfasst sind, und basierend auf dem zumindest einen Trainingsdatensatz, der nicht von der Anzahl von Trainingsdatensätzen umfasst ist.

Somit kann in diesem Fall das mathematische Modell basierend auf den zuvor schon vorhandenen Trainingsdatensätzen und neuen, noch nicht vom mathematischen Modell umfassten, Trainingsdatensätzen erzeugt werden. Dies kann vor einem Start einer Herstellung der zumindest einen Baustoffplatte und/oder während der Herstellung (während des Herstellungsprozesses) der zumindest einen Baustoffplatte erfolgen. Hierbei versteht sich im Rahmen der vorliegenden Offenbarung ein Erzeugen des mathematischen Modells basierend auf zuvor vorhandenen Trainingsdatensätzen und neu hinzugekommenen Trainingsdatensätzen auch als Trainieren des mathematischen Modells basierend auf den neuen Trainingsdatensätzen.

Die Information, dass zumindest ein Trainingsdatensatz vorhanden ist, der nicht von der Anzahl von Trainingsdatensätzen umfasst ist, auf denen das mathematische Modell basiert kann über eine Eingabe eines Bedieners der Produktionsanlage über die genannte Benutzerschnittstelle erfolgen und/oder von der zumindest einen Steuervorrichtung automatisch erfasst werden. Dementsprechend umfasst das Verfahren in einer beispielhaften Ausführungsform:
- Erhalten der Informationen, die eine Aussage repräsentieren, dass zumindest ein Trainingsdatensatz vorhanden ist, der nicht von der Anzahl von Trainingsdatensätzen umfasst ist, auf denen das mathematische Modell basiert basierend auf einer Eingabe über eine Benutzerschnittstelle.

Alternativ oder zusätzlich umfasst das Erhalten der Informationen, die die Aussage repräsentieren, dass zumindest ein Trainingsdatensatz vorhanden ist, der nicht von der Anzahl von Trainingsdatensätzen umfasst ist, auf denen das mathematische Modell basiert:
- Bestimmen, ob zumindest ein Trainingsdatensatz vorhanden ist, der nicht von der Anzahl von Trainingsdatensätzen umfasst ist, auf denen das mathematische Modell basiert.

In dieser Ausführungsform umfasst das Trainieren und/oder Erzeugen des mathematischen Modells basierend auf den Trainingsdatensätzen, die von der Anzahl von Trainingsdatensätzen umfasst sind, und basierend auf dem zumindest einen Trainingsdatensatz, der nicht von der Anzahl von Trainingsdatensätzen umfasst ist:
- Trainieren und/oder Erzeugen des mathematischen Modells basierend auf den Trainingsdatensätzen, die von der Anzahl von Trainingsdatensätzen umfasst sind, und basierend auf dem zumindest einen Trainingsdatensatz, der nicht von der Anzahl von Trainingsdatensätzen umfasst ist, wenn bestimmt wird, dass zumindest ein Trainingsdatensatz vorhanden ist, der nicht von der Anzahl von Trainingsdatensätzen umfasst ist, auf denen das mathematische Modell basiert.

In dieser beispielhaften Ausführungsform umfasst das Verfahren weiter ein Erhalten (beispielsweise ein Berechnen durch die zumindest eine Steuervorrichtung) von Voraussagedaten basierend auf dem mathematischen Modell, wobei das mathematische Modell auf den Trainingsdatensätzen, die von der Anzahl von Trainingsdatensätzen umfasst sind, und basierend auf dem zumindest einen Trainingsdatensatz, der nicht von der Anzahl von Trainingsdatensätzen umfasst ist, basiert, wobei die Voraussagedaten eine Voraussage zumindest eines Qualitätsparameters für die zumindest eine Baustoffplatte (der Baustoffplatte, die hergestellt wird und/oder die Teil der Serie von Baustoffplatten ist, die hergestellt werden) repräsentieren, und ein Ausgeben der Voraussagedaten.

Der beschriebene Aktualisierungsprozess basierend auf den neuen Trainingsdatensätzen ermöglicht es, dass das Modell aktuell bleibt, und insbesondere innerhalb eines Produktionsprozesses von Baustoffplatten eines Baustoffplattentyps immer besser an diesen Baustoffplattentyp angepasst wird. Dies ist insbesondere in Fällen von Vorteil, in denen ein mathematisches Modell anfänglich auf einer Gruppierung von Trainingsdatensetzen für den zu produzierenden Baustoffplattentyp mit Trainingsdatensätzen für einen anderen Baustoffplattentyp basiert. In solchen Fällen kann es eine kontinuierliche Aktualisierung des mathematischen Modells basierend auf neuen, während des Produktionsprozesses erhaltenen, Trainingsdatensätzen es ermöglichen, dass nach einer gewissen Produktionszeit (gegebenenfalls nach einigen Produktionszyklen) genügend Trainingsdatensätze für den zu produzierenden Baustoffplattentyp vorhanden sind, so dass Voraussagen für diesen Baustoffplattentyp mit einem mathematischen Modell möglich werden, das nur auf Trainingsdatensätzen für diesen zu produzierenden Baustoffplattentyp basiert.

Eine Produktionsanlage zum Herstellen von Baustoffplatten umfasst typischerweise eine Mehrzahl von Produktionsabschnitten und/oder -Einheiten. Produktionsbedingungen, denen ein Zwischenprodukt beim Produzieren der Baustoffplatte bei/innerhalb eines solchen Produktionsabschnitts und/oder bei/innerhalb einer solchen Produktionseinheit ausgesetzt ist, können wiederum durch eine Mehrzahl von Prozessparametern bestimmt sein. Da beispielsweise entsprechende Sensoren und/oder Messeinrichtungen einer Produktionsanlage entsprechende Soll- und Istwerte für jeweilige Prozessparameter während einer Produktion ermitteln, und diese zumindest für jeweilige Baustoffplattenproben (für die im Labor Qualitätsmerkmale vermessen werden) in den Probedatensätzen gespeichert werden, können die Probedatensätze Soll- und Istwerte für eine große Anzahl (z. B. für bis zu oder sogar mehr als 3500 in einer typischen Produktionsanlage) von Prozessparametern enthalten.

Da aber nicht alle Prozessparameter einen gleich großen Einfluss auf resultierende Qualitätsmerkmale einer produzierten Baustoffplatte haben müssen, hat es sich als vorteilhaft herausgestellt, eine Vorauswahl von (typischerweise einigen Hundert, beispielsweise 250 bis 500) Prozessparametern zu treffen (eine Gruppe von Prozessparametern zu bestimmen), die bei einem Anpassen und/oder Erzeugen des mathematischen Modells (z.B. durch die zumindest eine Steuervorrichtung) in Betracht gezogen wird. Diese Vorauswahl wird der zumindest einen Steuervorrichtung in einer beispielhaften Ausführungsform in Form von Prozessparameterauswahlinformationen zur Verfügung gestellt. Hierdurch kann insbesondere der Rechenaufwand, der für ein Anpassen und/oder Erzeugen des mathematischen Modells verwendet wird, kontrolliert und gegebenenfalls minimiert werden. Ebenfalls hat es sich als vorteilhaft herausgestellt, das mathematische Modell Vorrausagewerte für eine Vorauswahl an Qualitätsparametern auszugeben.

Dementsprechend umfasst das Bereithalten des mathematischen Modells für die Verwendung beim Herstellen der Baustoffplatte in einer beispielhaften Ausführungsform:
- Erhalten von Prozessparameterauswahlinformationen, die eine Auswahl von Prozessparametern des Produktionsverfahrens zum Herstellen der zumindest einen Baustoffplatte repräsentieren und/oder von Informationen, die zumindest einen ausgewählten Qualitätsparameter, für den ein Wert für die zumindest eine Baustoffplatte (der Baustoffplatte, die hergestellt wird und/oder die Teil der Serie von Baustoffplatten ist, die hergestellt werden) durch das mathematische Modell vorausgesagt werden soll, repräsentieren;
- Erzeugen des mathematischen Modells basierend auf der Auswahl von Prozessparametern und/oder für den zumindest einen ausgewählten Qualitätsparameter.

Hierbei können die Prozessparameterauswahlinformationen und/oder die Informationen, die den zumindest einen ausgewählten Qualitätsparameter repräsentieren, von der zumindest einen Steuervorrichtung durch eine Abfrage einer Datenbank, beispielsweise über eine Internetverbindung, und/oder basierend auf Informationen, die lokal gespeichert sind, beispielsweise auf der mit der zumindest einen Steuervorrichtung verbundenen Speichereinheit, erhalten werden. Alternativ oder zusätzlich können diese Informationen über eine Benutzereingabe mittels der genannten Benutzerschnittstelle erhalten werden. Mit anderen Worten umfasst in einer beispielhaften Ausführungsform das Erhalten der Prozessparameterauswahlinformationen und/oder der Informationen, die den zumindest einen ausgewählten Qualitätsparameter repräsentieren, zumindest eins aus:
- Erhalten der Prozessparameterauswahlinformationen und/oder der Informationen, die den zumindest einen ausgewählten Qualitätsparameter repräsentieren basierend auf einer Eingabe über eine (die) Benutzerschnittstelle;
- Erhalten der Prozessparameterauswahlinformationen und/oder der Informationen, die den zumindest einen ausgewählten Qualitätsparameter repräsentieren basierend auf einer Abfrage einer Datenbank und/oder einer Speichereinheit, auf die die zumindest eine Steuervorrichtung zugreifen kann.

Gemäß dem genannten Aspekt der Erfindung wird das Verfahren durch zumindest eine Steuervorrichtung einer Produktionsanlage zum Herstellen von Baustoffplatten oder durch ein System, das zumindest eine solche Steuervorrichtung umfasst, ausgeführt. Dabei umfasst die Produktionsanlage zumindest einen Sensor und/oder eine Messeinrichtung, der und/oder die eingerichtet ist, zumindest einen Sensormesswert und/oder einen Messwert der Messeinrichtung als Soll- oder Istwert eines entsprechenden Prozessparametes auszugeben, der eine entsprechende Prozessbedingung beim Herstellen der Baustoffplatte durch die Produktionsanlage charakterisiert wobei das Erhalten der Voraussagedaten basierend auf dem mathematischen Modell weiter umfasst:
- Erhalten der Voraussagedaten basierend auf dem mathematischen Modell und basierend auf zumindest einem Sensormesswert und/oder zumindest einem Messwert der Messeinrichtung.

Gemäß dem genannten Aspekt der Erfindung umfasst das Erhalten der Voraussagedaten ein Verwenden des zumindest einen erhaltenen Sensormesswerts und/oder des zumindest einem erhaltenen Messwerts der Messeinrichtung als Eingangsgröße(n) für das mathematische Modell, und ein Berechnen der Voraussagedaten mittels des mathematischen Modells basierend auf der (den) Eingangsgröße(n). Dabei können Sensormesswerte und/oder Messwerte der Messeinrichtung durch die zumindest eine Steuervorrichtung beispielsweise über eine oder mehrere entsprechende Kommunikationsverbindungen mit zumindest einem entsprechenden Sensor und/oder mit zumindest einer entsprechenden Messeinrichtung der Produktionsanlage empfangen werden. So umfasst das Verfahren in einer beispielhaften Ausführungsform:
- Empfangen des zumindest einen Sensormesswerts und/oder des zumindest einen Messwerts der Messeinrichtung über eine Kommunikationsverbindung von zumindest einem Sensor einer Produktionsanlage zum Herstellen der zumindest einen Baustoffplatte und/oder von zumindest einer Messeinrichtung der Produktionsanlage zum Herstellen der zumindest einen Baustoffplatte.

Wie erwähnt, umfasst das Verfahren gemäß dem genannten Aspekt ein Ausgeben der Voraussagedaten. Wie erwähnt können die Voraussagedaten zum Steuern einer Produktionsanlage zum Herstellen der zumindest einen Baustoffplatte verwendet werden und/oder ein Steuern der Produktionsanlage zumindest unterstützen. In einer beispielhaften Ausführungsform umfasst das Verfahren somit weiter:
Steuern zumindest einer Einheit und/oder eines Abschnitts einer Produktionsanlage zum Herstellen der zumindest einen Baustoffplatte basierend auf den ausgegebenen Voraussagedaten. Hierbei versteht sich, dass in beispielhaften Ausführungsformen ein Steuern zumindest eins umfasst von:
- ein direktes Steuern der zumindest einen Einheit und/oder des zumindest einen Abschnitts basierend auf entsprechenden Steuersignalen, die basierend auf den ausgegebenen Voraussagedaten durch die zumindest eine Steuervorrichtung erzeugt werden,
- ein Steuern der zumindest einen Einheit und/oder des zumindest einen Abschnitts durch einen Bediener der Anlage aufgrund einer Anzeige (z.B. einer visuellen Anzeige durch eine Anzeigevorrichtung) der Voraussage des zumindest einen Qualitätsparameters basierend auf den ausgegebenen Voraussagedaten.

Ein Ausgeben der Voraussagedaten kann somit ein internes Ausgeben dieser Daten beispielsweise innerhalb der zumindest einen Steuervorrichtung umfassen, beispielsweise für eine weitere Verarbeitung der Voraussagedaten durch die zumindest eine Steuervorrichtung. Ein Ausgeben der Voraussagedaten kann weiter ein Ausgeben der Voraussagedaten zur weiteren Verarbeitung durch eine (von der zumindest einen Steuervorrichtung) externe Vorrichtung umfassen. Beispielsweise können die ausgegebenen Voraussagedaten in der Steuervorrichtung oder in einer weiteren Datenverarbeitungseinrichtung in die genannten Steuersignale und/oder in Anzeigedaten gewandelt werden, die von der genannten Anzeigevorrichtung (z.B. von einem Bildschirm, der mit der Steuervorrichtung verbunden ist) zur Anzeige einer Repräsentation oder Darstellung verwendet werden kann.

So kann das Verfahren in einer beispielhaften Ausführungsform umfassen:
- Veranlassen, basierend auf den ausgegebenen Voraussagedaten, einer Anzeige einer Repräsentation der Voraussage des zumindest einen Qualitätsparameters für die zumindest eine Baustoffplatte (der Baustoffplatte, die hergestellt wird und/oder die Teil der Serie von Baustoffplatten ist, die hergestellt werden) basierend auf den Voraussagedaten; und/oder
- Erzeugen, basierend auf den ausgegebenen Voraussagedaten, von Steuersignalen zum Steuern zumindest einer Einheit und/oder eines Abschnitts der Produktionsanlage und/oder zum Einstellen zumindest eines Prozessparameters der Produktionsanlage bei einem Herstellen der zumindest einen Baustoffplatte.

Hierbei kann eine Repräsentation beispielsweise eine graphische Darstellung der Voraussagedaten (beispielsweise eine Echtzeitdarstellung) in Form einer Datenwert-Zeit-Kurve auf einem Bildschirm umfassen, wobei der Bildschirm als Anzeigevorrichtung direkt oder indirekt mit der Steuervorrichtung und/oder der Produktionsanlage verbunden sein kann. Eine solche Anzeige der Voraussagedaten kann es einem Benutzer ermöglichen, die Produktionsanlage (z.B. in Echtzeit) in Reaktion auf die angezeigten Voraussagewerte der Qualitätsmerkmale einzustellen.

In alternativen oder zusätzlichen Ausführungsformen wird das basierend auf den Voraussagedaten erzeugte zumindest eine Steuersignal verwendet, zumindest eine Komponente der Produktionsanlage, beispielsweise unter Verwendung einer basierend auf einer Feedback-Schleife arbeitenden Steuerelektronik direkt zu Steuern.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Einschränkung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer beispielhaften Produktionsanlage zum Herstellen einer Baustoffplatte und einer Steuervorrichtung;
- Fig. 2: ein beispielhaftes Flussdiagramm, das ein Verfahrens gemäß einer beispielhaften Ausführungsform des genannten Aspekts der Erfindung darstellt;
- Fig. 3: eine schematische Darstellung eines Gruppierens von Baustoffplattentypen;
- Fig. 4: ein beispielhaftes Flussdiagramm, das Schritte eines Verfahrens gemäß einer beispielhaften Ausführungsform des genannten Aspekts der Erfindung darstellt; und
- Fig. 5: eine schematische Darstellung einer beispielhaften Ausführungsform einer Vorrichtung gemäß dem genannten Aspekt der Erfindung, beispielsweise einer mobilen Vorrichtung.

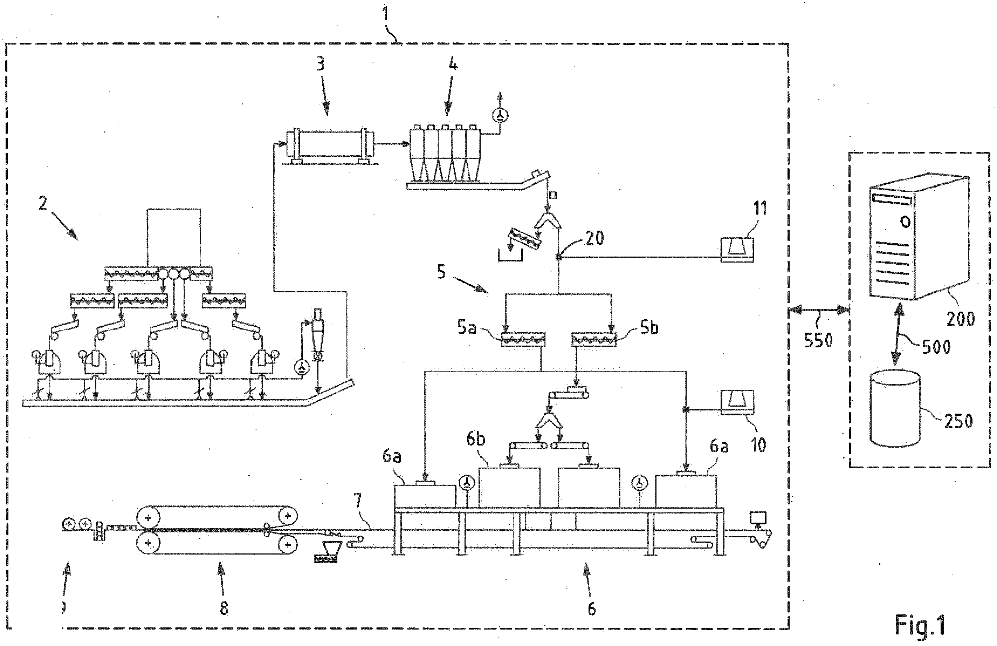

Fig. 1 zeigt eine schematische Darstellung einer beispielhaften Produktionsanlage 1 zum Herstellen einer Werkstoffplatte aus Spanmaterial als illustratives Beispiel einer Baustoffplatte im Einklang mit der vorliegenden Offenbarung. Fig. 1 zeigt weiter eine schematische Darstellung einer Steuervorrichtung 200, die mit der Produktionsanlage 1 zum Steuern der Produktionsanlage 1 beispielsweise über die schematisch dargestellte Verbindung 550 verbunden ist. Dazu kann die Steuervorrichtung 200 eingerichtet sein, die Schritte des Verfahrens gemäß des genannten Aspekts der Erfindung auszuführen. Die Steuervorrichtung 200 kann dazu beispielsweise eine Verarbeitungsanlage wie einen Computer und/oder ein Computersystem umfassen, das mit (nicht dargestellten) Sensoren und/oder Messeinrichtungen der Produktionsanlage 1 verbunden ist, beispielsweise von solchen Sensoren und/oder Messeinrichtungen Soll-und/oder Istwerte von Prozessparametern von Abschnitten oder Einheiten der Produktionsanlage 1 zu erhalten. Alternativ oder zusätzlich kann die Steuervorrichtung 200 in beispielhaften Ausführungsformen eine oder mehrere mobile Vorrichtungen, beispielsweise ein oder mehrere Smartphones, ein oder mehrere Tablett-Computer, und/oder ein oder mehrere Laptops umfassen.

Die Steuervorrichtung 200 umfasst in beispielhaften Ausführungsformen eine oder mehrere Anzeigevorrichtungen, wie beispielsweise einen oder mehrere Bildschirme, und/oder ist mit einer oder mehreren Anzeigevorrichtungen verbunden um beispielsweise eine Anzeige des zumindest einen Qualitätsmerkmals beispielsweise einer in Produktion befindlichen Baustoffplatte anzuzeigen.

In beispielhaften Ausführungsformen kann die Steuervorrichtung 200 mehrere Steuervorrichtungen umfassen von denen eine einzelne Steuervorrichtung einen oder mehrere Schritte des Verfahrens gemäß dem genannten Aspekt der vorliegenden Erfindung ausführen kann. So kann es beispielsweise möglich sein, dass die in Fig. 1 nur schematisch dargestellte Steuervorrichtung 200 eine Verarbeitungseinheit wie beispielsweise einen oder mehrere Computer umfasst, der mit Sensoren und/oder Messeinrichtungen der Produktionsanlage 1 (drahtlos, drahtgebunden, und/oder über eine Internetverbindung) verbunden ist, und beispielsweise eine mobile Vorrichtung, die zumindest mit der Verarbeitungseinheit (drahtlos, drahtgebunden, und/oder über eine Internetverbindung) verbunden ist. So kann in möglich sein, dass beispielsweise insbesondere Schritte, die eine Anzeige und/oder eine Eingabe von Daten und/oder Informationen umfassen, in beispielhaften Ausführungsformen eine Anzeige und/oder Eingabe von Daten unter Verwendung (beispielsweise eines Touchscreens) eines mobilen Geräts wie eines Smartphones umfassen.

Fig. 1 zeigt weiter eine Speichervorrichtung (beispielsweise eine oder mehrere Festplatten und/oder einer oder mehrere Cloud-Speichereinheiten), die beispielsweise zum Speichern von Probedatensätzen und oder Trainingsdatensätzen vorgesehen sein kann und dazu über die schematisch dargestellte Verbindung 500 mit der Steuervorrichtung 200 verbunden ist.

In beispielhaften Ausführungsformen umfassen Verbindungen im Einklang mit der vorliegenden Offenbarung, insbesondere die schematisch dargestellten Verbindungen 550 zwischen der Steuervorrichtung 200 und der Produktionsanlage 1 (beispielsweise zwischen der Steuervorrichtung 200 und einem oder mehreren Sensoren, Messeinrichtungen und/oder Steuercontrollern der Produktionsanlage 1) und 500 insbesondere direkte oder indirekte drahtgebundene Kommunikations-Verbindungen (beispielsweise LAN-Verbindungen), und/oder direkte oder indirekte drahtlose Kommunikations-Verbindungen umfassend Funk-Verbindungen wie Bluetooth, NFC, WLAN, 4G oder 5G und/oder Kommunikations-Verbindungen über das Internet.

Fig. 1 zeigt ein Schema mit Einheiten, Abschnitten oder Aggregaten der Produktionsanlage 1, die bei Herstellung der Baustoffplatten dienen können. Insbesondere sind folgende Abschnitte der Produktionsanlage 1 dargestellt, die für einzelne Produktionsschritte zur Herstellung einer Baustoffplatte verwendet werden können, dargestellt: ein Zerspaner 2, ein Trockner für Späne 3, eine Sichteinrichtungen 4, eine Vorrichtung zur Versehung der Späne mit einem Bindemittel mit Mischer 5a, 5b, die stellvertretend auch für andere Vorrichtungen stehen, mit denen Bindemittel auf die Späne gebracht wird, ferner Streueinrichtungen 6, die die beleimten Späne ggf. in mehreren Lagen unterschiedlicher Spangrößen aus mehreren Streuköpfen 6a, 6b auf ein Formportband 7 zu einer Matte streuen, eine kontinuierliche Presse 8 und eine Schneid- oder Fräseinrichtung 9 zur Dimensionierung der fertigen Baustoffplatten.

Dabei stehen die Zerspaner 2 auch symbolisch allgemein für die Zerkleinerung von Holz zu Spänen. In der Figur sind beispielhaft fünf Messerringzerspaner angedeutet, die aus einem darüber liegenden Bunker über Förderschnecken gespeist werden. Diese können je nach Messereinstellung unterschiedliche Spangrößen erzeugen. Die erzeugten Späne unterschiedlicher Größe und Feuchtigkeit werden an den Trockner 3 weitergeleitet.

Die sich in der Figur anschließende Sichteinrichtung 4 kann in unterschiedlichen Ausführungen an verschiedenen Herstellpunkten Verwendung finden. Diese Einrichtung kann verwendet werden, um Feinpartikel (z.B. Staub) bzw. Grobpartikel (z.B. unerwünschte Mineralien oder Leimlumpen) aus dem Fluss der Späne auszusondern. Sichteinrichtungen 4 können auch genutzt werden, um beispielsweise bei der Streuung bereits eine Fraktionierung nach der Spangröße zu erwirken, so dass unterschiedliche Schichten der späteren Baustoffplatte aus unterschiedlich großen Spänen erzeugt werden können.

In dem Ausführungsbeispiel gemäß Fig. 1 werden beispielsweise zwei unterschiedliche Spangrößenbereiche erzeugt, die aus Bunkern jeweils einem Mischer 5a und einem Mischer 5b zugeführt werden. In diesen Mischern werden die Späne zumindest teilweise mit Bindemittel benetzt.

So ist es möglich, den Streuköpfen 6a für die Deckschichten der zu streuenden und zu verpressenden Matte andere Spangrößen zuzuführen als den Streuköpfen 6b für die Mittelschicht(en).

Die Doppelbandpresse 8, wie sie zur Herstellung von Baustoffplatten, insbesondere Baustoffplatten aus Holzwerkstoffen verwendet wird, weist in ihrem grundsätzlichen Aufbau ein Pressenoberteil mit oberer beheizbarer Druckplatte und ein Pressenunterteil mit unterer beheizbarer Druckplatte auf. Rahmen, in denen auch Druckgeber zur Druckgebung abgestützt sind, verbinden das Pressenoberteil und das Pressenunterteil. Im Pressenoberteil sowie im Pressenunterteil sind endlos umlaufende Stahlbänder unter Bildung eines Pressspaltes für die Druck- und Temperaturbeaufschlagung der Matte um Bandumlenktrommeln geführt.

Ferner erkennt man in Fig. 1 auch eine Spangrößenmesseinrichtung 10 (ein Beispiel einer Messeinrichtung) nach dem Mischer 5. Optional kann auch eine Spangrößenmesseinrichtung 11 vor dem Mischer vorgesehen sein. In diese Spangrößenmesseinrichtung 10, 11 kann eine repräsentative Auswahl von Spänen, beispielsweise eine sehr kleine, aus dem Transportprozess an einer Probenentnahmestelle 20 ausgeschleuste Spanmenge vermessen werden. Beispielhafte Prozessparameter, die in einem Zusammenhang mit solchen durch die Spangrößenmesseinrichtung vermessenen Spänen stehen können sind beispielsweise eine Zuführmenge von Bindemittel über Leimdüsen, eine Zuführmenge von Spänen, und/oder eine Durchschleusungsgeschwindigkeit von Spänen durch den Mischer 5a, 5b, eine Drehzahl einer Welle eines Mischers 5a, 5b, etc.

Ein Verfahren gemäß dem genannten Aspekt der vorliegenden Offenbarung kann im Zusammenhang mit einer Produktionsanlage gemäß Fig. 1 ausgeführt werden, wobei es sich versteht, dass die vorliegende Erfindung aber nicht auf die Produktionsanlage gemäß Fig. 1 eingeschränkt ist.

Gemäß beispielhafter Ausführungsformen können Prozessparameter insbesondere Prozessparameter der Holzwerkstoffproduktion sein, beispielsweise Prozessparameter eines Zerfaserung und Beleimungsabschnitts einer Produktionsanlage zur Herstellung von Holzwerkstoffplatten, insbesondere ein oder mehrere Prozessparameter umfassen, die ausgewählt sind zumindest aus:
- Quetschwassermenge;
- Dampfzugabe Kocher;
- Füllstand Kocher;
- Temperatur Kocher;
- Dampfdruck Kocher;
- Kochzeit;
- Hackschnitzelmenge;
- Paraffinzugabe;
- Energieaufnahme Refiner;
- Temperatur Refiner;
- Dampfdruck Refiner;
- Mahlspalt Refiner;
- Mahlscheibenalter;
- Blasventilöffnung;
- pH-Wert der Fasern;
- Leimmenge.

In beispielhaften Ausführungsformen können Prozessparameter eines Mattenformungsabschnitts einer Produktionsanlage zur Herstellung von Holzwerkstoffplatten, insbesondere ein oder mehrere Prozessparameter umfassen, die ausgewählt sind zumindest aus:
- Faseraustragsmenge;
- Streuhöhe;
- Formbandgeschwindigkeit;
- Flächengewicht Matte;
- Mattenfeuchte;
- Streubreite;
- Vorpressdrücke;
- Vorpressdistanzen;
- Besäumbreite;
- Mattendichte;
- Sprühwassermenge;
- Mattenhöhe Formbandende;
- Mattentemperatur;
- Bedüsungshöhe;
- Fehlschüttung.

Für solche Prozessparameter können in einer Produktionsanlage entsprechende Sensoren und/oder Messeinrichtungen vorgesehen sein, so dass diesen Prozessparametern entsprechend eingestellte Sollwerte, bzw. Istwerte über entsprechende Kommunikationsverbindungen der zumindest einen Steuervorrichtung zur Verfügung gestellt werden können.

Insbesondere ist es möglich, dass beispielsweise gemessene und/oder eingestellte Soll-, bzw. Istwerte bei einer Produktion einer Baustoffplatte zusammen mit entsprechenden Zeitstempeln gespeichert werden, so dass für eine produzierte Baustoffplatte die entsprechenden Prozessparameterwerte zu den jeweiligen Zeitpunkten zur Verfügung stehen. Wie beschrieben können für Baustoffplattenproben, die beispielsweise für eine Vermessung im Labor ausgeschleust werden können zusätzlich noch Messwerte für Qualitätsmerkmale erhalten werden, die zusammen mit den Prozessparameterwerten in einem Probedatensatz, bzw. einem Trainingsdatensatz, für die entsprechende Baustoffplattenprobe gespeichert werden können.

Gemäß beispielhafter Ausführungsformen sind Qualitätsmerkmale, die eine Baustoffplatte charakterisieren können, insbesondere ein oder mehrere Qualitätsmerkmale, die ausgewählt sind zumindest aus:
- Querzugfestigkeit;
- Rohdichte;
- Biegefestigkeit;
- Dickenquellung.

So umfasst ein Probedatensatz, bzw. ein Trainingsdatensatz für eine Baustoffplattenprobe in beispielhaften Ausführungsformen Daten (Prozessparameterdaten), die zumindest einen Wert (z.B. Soll- und/oder Istwert) für zumindest einen entsprechenden Prozessparameter mit zugehörigem Zeitstempel repräsentieren, und Daten (Qualitätsparameterdaten), die zumindest einen Wert (z.B. Messwert und/oder Labormesswert) für zumindest ein entsprechendes Qualitätsmerkmal einer Baustoffplattenprobe repräsentieren.

Fig. 1 zeigt weiter ein Speichermedium 250, das mit der Steuervorrichtung 200 über Verbindung 500 verbunden ist, auf das die Steuervorrichtung somit zugreifen kann.

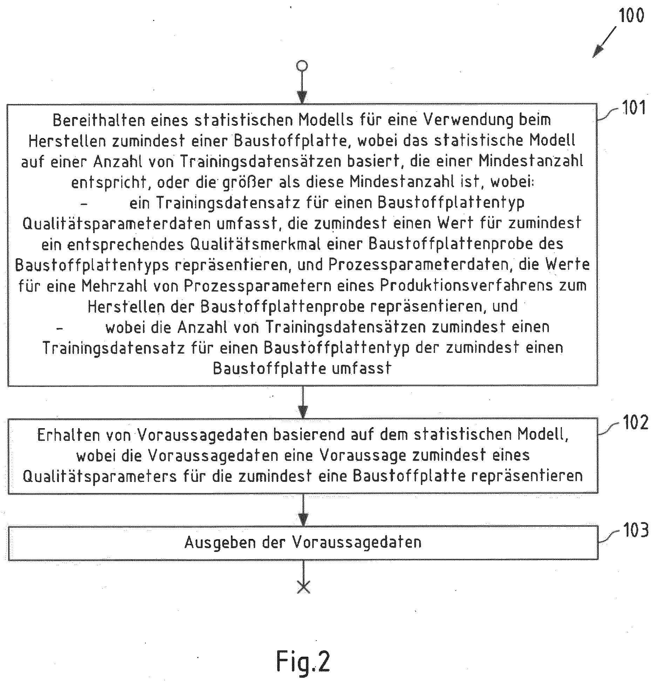

Fig. 2 ist ein beispielhaftes Flussdiagramm, das eine beispielhafte Ausführungsform des Verfahrens 100 gemäß dem genannten Aspekt der vorliegenden Erfindung darstellt. Das Flussdiagramm 100 kann als Veranschaulichung eines beispielhaften Steuerprozesses zum Steuern einer Produktionsanlage zum Herstellen einer Baustoffplatte, beispielsweise der Produktionsanlage 1 gemäß Fig. 1 verstanden werden. Ohne Beschränkung der Erfindung darauf, wird im Folgenden davon ausgegangen, dass das Verfahren 100 durch die Steuervorrichtung 200 gemäß Fig. 1 ausgeführt wird. Allerdings kann Verfahren 100 in anderen beispielhaften Ausführungsführungsformen von einem oder mehreren Prozessoren der Steuervorrichtung 200 ausgeführt werden, und/oder von mehreren Steuervorrichtungen, wobei beispielsweise einer oder mehrere Prozessoren und/oder eine oder mehrere der Steuervorrichtungen einen oder mehrere Schritte des Verfahrens 100 ausführen kann.

Wie in Fig. 2 dargestellt, umfasst das Verfahren 100 einen Schritt 101 des Bereithaltens eines mathematischen Modells für eine Verwendung beim Herstellen zumindest einer Baustoffplatte, wobei das mathematische Modell auf einer Anzahl von Trainingsdatensätzen basiert, die einer Mindestanzahl entspricht, oder die größer als diese Mindestanzahl ist. Mit anderen Worten kann das Verfahren 100, wie hierin beschrieben einen Schritt beispielsweise des Gespeicherthaltens des mathematischen Modells (beispielsweise von Modellkoeffizienten für eine oder mehrere mathematische Gleichungen, von Trainingsdatensätzen zum Trainieren und/oder Erzeugen des mathematischen Modells, und oder von Daten, beispielsweise von Programmdaten, die die mathematischen Gleichungen repräsentieren) umfassen.

Wie dargestellt umfasst dabei ein Trainingsdatensatz für einen Baustoffplattentyp Qualitätsparameterdaten, die zumindest einen Wert für zumindest ein entsprechendes Qualitätsmerkmal einer Baustoffplattenprobe des Baustoffplattentyps repräsentieren, und Prozessparameterdaten, die Werte für eine Mehrzahl von Prozessparametern eines Produktionsverfahrens zum Herstellen der Baustoffplattenprobe repräsentieren.

Wie weiter dargestellt, umfasst dabei die Anzahl von Trainingsdatensätzen zumindest einen Trainingsdatensatz für einen Baustoffplattentyp der zumindest einen Baustoffplatte. Wie hierin beschrieben, kann die Anzahl von Trainingsdatensätzen in beispielhaften Ausführungsformen ausschließlich Trainingsdatensätze für den Baustoffplattentyp der zumindest einen Baustoffplatte (der Baustoffplatte, die hergestellt wird und/oder die Teil der Serie von Baustoffplatten ist, die hergestellt werden) umfassen. **In** beispielhaften Ausführungsformen kann die Anzahl von Trainingsdatensätzen den zumindest einen Trainingsdatensatz für den Baustoffplattentyp der zumindest einen Baustoffplatte (der Baustoffplatte, die hergestellt wird und/oder die Teil der Serie von Baustoffplatten ist, die hergestellt werden) umfassen, und zumindest einen Trainingsdatensatz für zumindest einen anderen Baustoffplattentyp. Dabei kann in einer beispielhaften Ausführungsform das mathematische Modell auf einer Anzahl von Trainingsdatensätzen für den Baustoffplattentyp der zumindest einen Baustoffplatte basiert, und zumindest auf einer Anzahl von Trainingsdatensätzen für den anderen Baustoffplattentyp, wobei die Anzahl von Trainingsdatensätzen für den Baustoffplattentyp der zumindest einen Baustoffplatte kleiner ist als die Mindestanzahl und/oder kleiner als die Anzahl der Baustoffplatten des anderen Baustoffplattentyps.

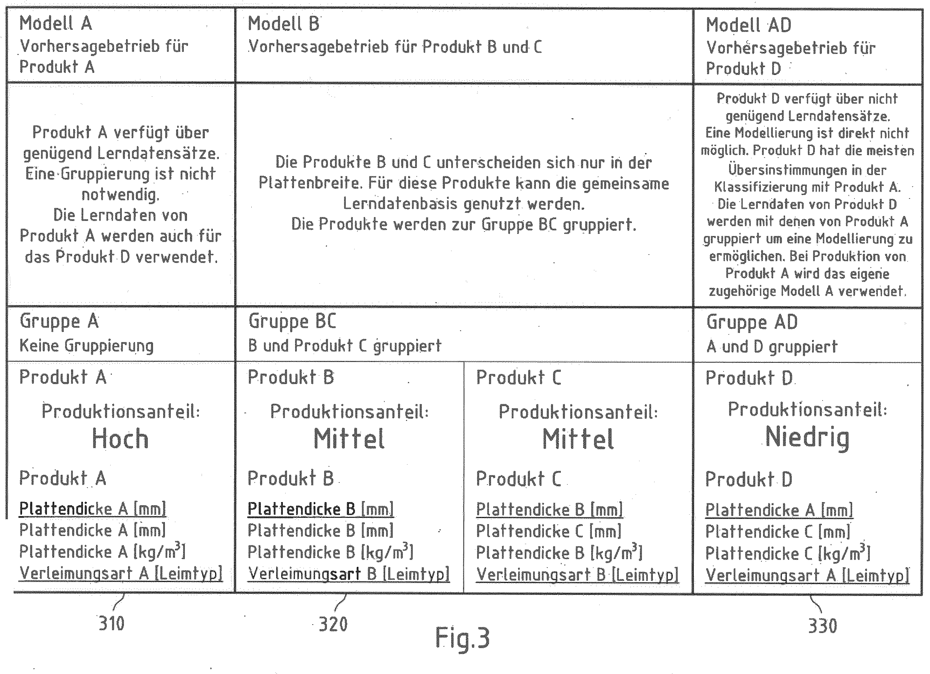

Dies ist beispielhaft in Fig. 3 für vier verschiedene Plattentypen A, B, C und D illustriert. Der Kasten 310 in Fig. 3 illustriert einen Fall, in dem Baustoffplattentyp A der zumindest einen Baustoffplatte (der Baustoffplatte, die hergestellt wird und/oder die Teil der Serie von Baustoffplatten ist, die hergestellt werden) entspricht. Wie dargestellt, sind für diesen Plattentyp A genügend Trainingsdatensätze vorhanden, so dass ein mathematisches Modell zum Verwenden bei einer Herstellung von Baustoffplatten des Baustoffplattentyps A alleine basierend auf Trainingsdatensätzen für den Baustoffplattentyp A erzeugt werden kann.

Der Kasten 330 illustriert beispielhaft einen Fall, in dem die Anzahl von Trainingsdatensätzen für den Baustoffplattentyp der zumindest einen Baustoffplatte (der Baustoffplatte, die hergestellt wird und/oder die Teil der Serie von Baustoffplatten ist, die hergestellt werden), im dargestellten Fall für den Baustoffplattentyp D, kleiner ist als die Mindestanzahl und kleiner als die Anzahl der Baustoffplatten des anderen Baustoffplattentyps, im dargestellten Fall des Baustoffplattentyps D. Da aber Eigenschaften von Baustoffplatten der Baustoffplattentypen A und D im beispielhaften Fall in den Eigenschaften Plattendicke und Verleimungsart übereinstimmen, ermöglicht in diesem Fall aber eine Gruppierung der Baustoffplattentypen A und D, dass ein mathematisches Modell basierend auf Trainingsdatensätzen für den Baustoffplattentyp A und basierend auf Trainingsdatensätzen für den Baustoffplattentyp D erzeugt werden kann, und für eine Voraussage von Qualitätsmerkmalen des Plattentyps D verwendet werden kann, obwohl für diesen Plattentyp alleine noch nicht genügend Probedatensätze erzeugt wurden. Unter Verwendung der beschriebenen Aktualisierungsprozesse kann das auf der Gruppierung von Trainingsdatensätzen basierende mathematische Modell für den Baustoffplattentyp D sukzessive mit Trainingsdatensätzen für den Baustoffplattentyp D aktualisiert werden, bis schließlich auch für den Baustoffplattentyp D keine Gruppierung mehr erforderlich ist.

Die dargestellte Gruppierung von Baustoffplattentyp A und Baustoffplattentyp D ist vorteilhaft für Baustoffplattentypen D, für die nur sehr wenige Trainingsdatensätze vorhanden sind, und ist möglich, da für Baustoffplattentyp A alleine genügend Trainingsdatensätze zur Verfügung stehen. Kasten 320 der Fig. 3 zeigt demgegenüber einen Fall einer Gruppierung von Baustoffplattentypen B und C, für die jeweils alleine nicht genügend Trainingsdatensätze vorhanden sind. Ein Gruppierung dieser Baustoffplattentypen B und C ist aber dennoch möglich, da die Summe der Anzahlen von für die einzelnen Baustoffplattentypen B und C vorhandenen Trainingsdatensätzen größer als die Mindestanzahl ist.

Wieder mit Bezug auf Fig. 2 umfasst das Verfahren 100, wie dargestellt, einen Schritt des Erhaltens von Voraussagedaten basierend auf dem mathematischen Modell, wobei die Voraussagedaten eine Voraussage zumindest eines Qualitätsparameters für die zumindest eine Baustoffplatte (der Baustoffplatte, die hergestellt wird und/oder die Teil der Serie von Baustoffplatten ist, die hergestellt werden) repräsentieren. Wie weiter hierin beschrieben und wie weiter in Fig. 2 dargestellt, umfasst das Verfahren weiter einen Schritt 103 des Ausgebens der Voraussagedaten.

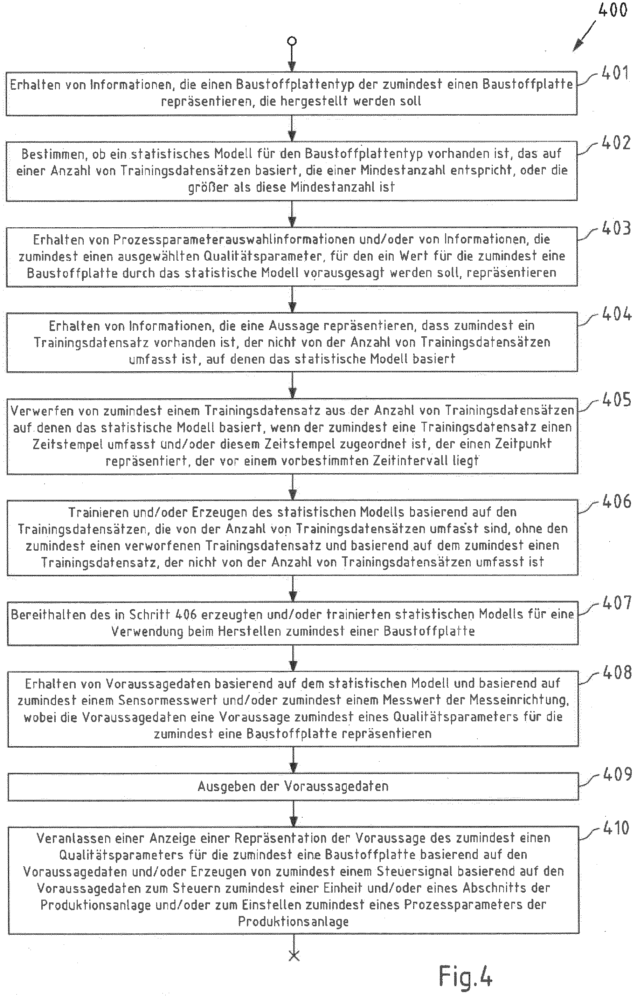

Fig. 4 zeigt ein beispielhaftes Flussdiagramm 400, das Schritte eines Verfahrens gemäß einer beispielhaften Ausführungsform des genannten Aspekts der Erfindung darstellt. Das Flussdiagramm 400 kann als Veranschaulichung eines beispielhaften Steuerprozesses zum Steuern einer Produktionsanlage zum Herstellen einer Baustoffplatte, beispielsweise der Produktionsanlage 1 gemäß Fig. 1 verstanden werden. Ohne Beschränkung der Erfindung darauf, wird im Folgenden davon ausgegangen, dass das Verfahren 400 durch die Steuervorrichtung 200 gemäß Fig. 1 ausgeführt wird. Allerdings kann Verfahren 400 in anderen beispielhaften Ausführungsführungsformen von einem oder mehreren Prozessoren der Steuervorrichtung 200 ausgeführt werden, und/oder von mehreren Steuervorrichtungen, wobei beispielsweise einer oder mehrere Prozessoren und/oder eine oder mehrere der Steuervorrichtungen einen oder mehrere Schritte des Verfahrens 400 ausführen kann.

Wie dargestellt, umfasst das Verfahren 400 einen Schritt 401 des Erhaltens von Informationen, die einen Baustoffplattentyp der zumindest einen Baustoffplatte repräsentieren, die hergestellt werden soll. Dieser Schritt kann beispielsweise im Zusammenhang mit einem Produktionswechsel erfolgen, wenn ein zu produzierender Baustoffplattentyp gewechselt wird. Die Informationen hinsichtlich des Baustoffplattentyps können beispielsweise basierend auf einer Eingabe eines Bedieners der Produktionsanlage über die genannte Benutzerschnittstelle erfolgen.

Wie weiter dargestellt, bestimmt basierend darauf die Steuervorrichtung 200, ob ein mathematisches Modell für den Baustoffplattentyp vorhanden ist, das auf einer Anzahl von Trainingsdatensätzen basiert, die einer Mindestanzahl entspricht, oder die größer als diese Mindestanzahl ist. Mit anderen Worten überprüft die Steuervorrichtung 200 in dem Schritt 402, ob es für den in Schritt 401 erhaltenen (zum Beispiel von einem Bediener der Produktionsanlage eingestellten) Baustoffplattentyp ein mathematisches Modell gibt, für das alleine oder für das in Gruppierung mit einem anderen Baustoffplattentyp genügend Trainingsdatensätze vorhanden sind.

In einem Schritt 403 erhält die Steuervorrichtung 200 Prozessparameterauswahlinformationen und/oder von Informationen, die zumindest einen ausgewählten Qualitätsparameter, für den ein Wert für die zumindest eine Baustoffplatte durch das mathematische Modell vorausgesagt werden soll, repräsentieren. Wie beschrieben, kann die Steuervorrichtung 200 die Prozessparameterauswahlinformationen und/oder die Informationen bezüglich des ausgewählten Qualitätsparameters insbesondere basierend auf einer Benutzereingabe erhalten.

Die Steuervorrichtung 200 kann nun das mathematische Modell basierend auf der Auswahl von Prozessparametern und/oder für den zumindest einen ausgewählten Qualitätsparameter erzeugen. Wie in Fig. 4 dargestellt, umfass das Verfahren im dargestellten Beispiel einen Schritt 404 des Erhaltens von Informationen, die eine Aussage repräsentieren, dass zumindest ein Trainingsdatensatz vorhanden ist, der nicht von der Anzahl von Trainingsdatensätzen umfasst ist, auf denen das mathematische Modell basiert.

Dieser Schritt kann direkt nach Schritt 402 ausgeführt werden. Beispielsweise kann bei einem Produktionswechsel mit Schritt 402 festgestellt werden, dass ein mathematisches Modell schon für den zu produzierenden Baustoffplattentyp, beispielsweise in einem vorherigen Produktionszyklus verwendet wurde. Das entsprechende mathematische Modell (beispielsweise entsprechende Modellkoeffizienten, Trainingsdatensätze und/oder Daten, die entsprechende Gleichungen repräsentieren) kann nach Abschluss des vorherigen Produktionszyklus entsprechend für eine weitere Verwendung gespeichert worden sein.

In dem Schritt 404 kann nun festgestellt werden, dass in der Zwischenzeit weitere Probedatensätze als Trainingsdatensätze, beispielsweise aus einem Labor, in dem in der Zwischenzeit entsprechende Plattenproben untersucht worden sind, erhalten wurden, die für das zuletzt verwendete Modell noch nicht zur Verfügung standen. Schritt 404 kann aber auch (zusätzlich oder alternativ) während eines Herstellungsprozesses des Herstellens der zumindest einen Baustoffplatte ausgeführt werden, wenn beispielsweise während des Produktionsprozesses weitere Probedatensätze als Trainingsdatensätze verfügbar werden.

In einem Schritt 405 verwirft die Steuervorrichtung zumindest einen Trainingsdatensatz aus der Anzahl von Trainingsdatensätzen auf denen das mathematische Modell basiert, wenn der zumindest eine Trainingsdatensatz einen Zeitstempel umfasst und/oder diesem Zeitstempel zugeordnet ist, der einen Zeitpunkt repräsentiert, der vor einem vorbestimmten Zeitintervall liegt (beispielsweise vor einem Zeitintervall vor dem Start einer Ausführung des Verfahrens und/oder einer Herstellung der zumindest einen Baustoffplatte). Dieser Schritt 405 kann direkt nach Schritt 402 ausgeführt werden (vor und/oder nach Schritt 404). Wie hierin beschrieben kann die Steuervorrichtung 200 beispielsweise eingerichtet sein, Informationen zu erhalten, die eine Aussage repräsentieren, dass zumindest ein Trainingsdatensatz auf dem das mathematische Modell basiert (beispielsweise das mathematische Modell, dass in dem vorherigen Produktionszyklus verwendet wurde), einen Zeitstempel umfasst oder diesem zugeordnet ist, der einen Zeitpunkt repräsentiert, der vor einem vorbestimmten Zeitintervall liegt. Diese Information kann die Steuervorrichtung 200 beispielsweise basierend auf einer Eingabe über die genannte Benutzerschnittstelle erhalten. Alternativ oder zusätzlich kann die Steuervorrichtung 200 eingerichtet sein, beispielsweise automatisch nach Schritt 402 zu bestimmen, ob zumindest ein Trainingsdatensatz auf dem das mathematische Modell basiert, einen Zeitstempel umfasst oder diesem zugeordnet ist, der einen Zeitpunkt repräsentiert, der vor einem vorbestimmten Zeitintervall liegt. Der Schritt 405 kann aber auch zu einem anderen Zeitpunkt ausgeführt werden, beispielsweise während oder nach dem Herstellungsprozess zum Herstellen der zumindest einen Baustoffplatte.

Wie in Fig. 4 dargestellt, umfasst das Verfahren 400 weiter einen Schritt 406 des Trainierens und/oder Erzeugens des mathematischen Modells basierend auf den Trainingsdatensätzen, die von der Anzahl von Trainingsdatensätzen umfasst sind (der Anzahl von Trainingsdatensätzen gemäß Schritt 402), ohne den zumindest einen (in Schritt 405) verworfenen Trainingsdatensatz und basierend auf dem zumindest einen Trainingsdatensatz (gemäß Schritt 404), der nicht von der Anzahl von Trainingsdatensätzen umfasst ist. Mit anderen Worten stellen die Schritte 404 und 405 Aktualisierungsschritte dar, in denen neu verfügbar gewordene und zu alte Trainingsdatensätze ermittelt werden. In Schritt 406 wird basierend auf den nicht verworfenen Trainingsdatensätzen (die schon verfügbar waren) und den neu verfügbar gewordenen Trainingsdatensätzen das mathematische Modell erzeugt/trainiert.

In einem Schritt 407 hält die Steuervorrichtung 200 das in Schritt 406 erzeugte und/oder trainierte mathematische Modell für eine Verwendung beim Herstellen der zumindest einen Baustoffplatte bereit. Die Steuervorrichtung kann das in Schritt 406 erzeugte mathematische Modell (entsprechende Modellkoeffizienten, entsprechende Trainingsdatensätze und/oder Daten, die entsprechende mathematische Gleichungen repräsentieren) beispielsweise auf dem Speichermedium 250 für die Verwendung beim Herstellen der zumindest einen Baustoffplatte gespeichert halten.

In einem Schritt 408 erhält (z.B. berechnet) die Steuervorrichtung 200 Voraussagedaten basierend auf dem mathematischen Modell und basierend auf zumindest einem Sensormesswert eines Sensors der Produktionsanlage 1 und/oder zumindest einem Messwert der genannten Messeinrichtung der Produktionsanlage 1, wobei die Voraussagedaten eine Voraussage zumindest eines Qualitätsparameters für die zumindest eine Baustoffplatte repräsentieren. Die Voraussagedaten werden in Schritt 409 ausgegeben. Wie erwähnt können die ausgegebenen Voraussagedaten beispielsweise durch die Steuervorrichtung 200 in die genannten Steuersignale und/oder in die genannten Anzeigedaten gewandelt werden, die von der genannten Anzeigevorrichtung (z.B. von einem Bildschirm, der mit der Steuervorrichtung verbunden ist) zur Anzeige einer Repräsentation oder Darstellung verwendet werden kann.

So umfasst das Verfahren 400 einen Schritt 410 des Veranlassens einer Anzeige einer Repräsentation der Voraussage des zumindest einen Qualitätsparameters für die zumindest eine Baustoffplatte basierend auf den Voraussagedaten und/oder Erzeugen von zumindest einem Steuersignal basierend auf den Voraussagedaten zum Steuern zumindest einer Einheit und/oder eines Abschnitts der Produktionsanlage 1 und/oder zum Einstellen zumindest eines Prozessparameters der Produktionsanlage 1.

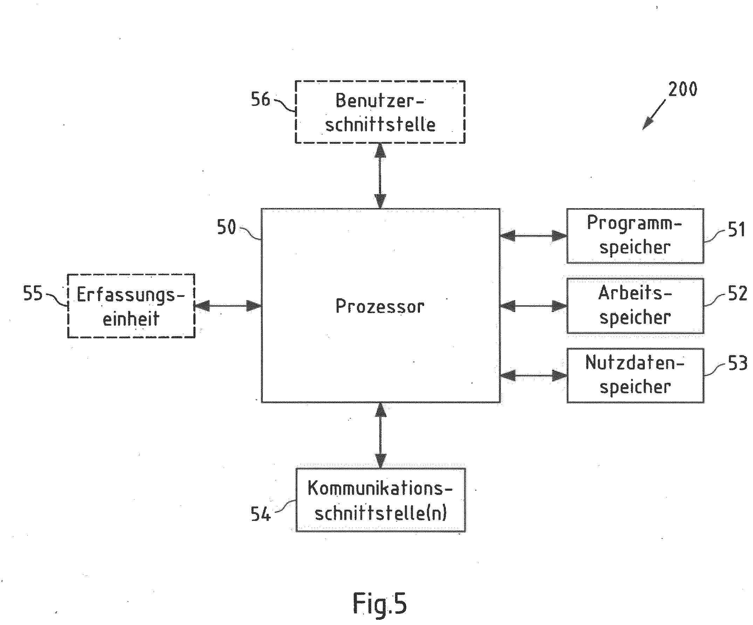

Fig. 5 ist eine schematische Darstellung einer beispielhaften Ausführungsform einer Steuervorrichtung 200 die eingerichtet ist, das Verfahren gemäß dem genannten Aspekt der Erfindung auszuführen. Die Steuervorrichtung 200 kann beispielsweise zumindest Teil einer Steuervorrichtung einer Produktionsanlage sein.

Die Steuervorrichtung 200 umfasst einen Prozessor 50, einen Programmspeicher 51, einen Arbeitsspeicher 52, einen Nutzdatenspeicher 200, eine oder mehrere Kommunikationsschnittelle(n) 54, eine Erfassungseinheit 55 beispielsweise zur Erfassung von Ist- oder Sollwerten für einen oder mehrere Prozessparameter und eine Benutzerschnittstelle 56.

Der Prozessor 50 führt beispielsweise ein Programm zur Durchführung des genannten Verfahrens gemäß dem genannten Aspekt der Erfindung aus, das in dem Programmspeicher 51 gespeichert ist. Arbeitsspeicher 52 dient insbesondere der Speicherung temporärer Daten während des Ablaufs dieses Programms.

Der Nutzdatenspeicher 250 dient der Speicherung von Daten, die bei der Abarbeitung des Programms erforderlich sind und kann dem Speichermedium 250 der Figur 1 entsprechen.

Die Kommunikationsschnittstelle(n) 54 umfassen eine oder mehrere Schnittstellen zur Kommunikation der Vorrichtung insbesondere mit der Produktionsanlage 1 und/oder zumindest mit Teilen (beispielsweise mit einem oder mehreren Sensoren und/oder mit einer oder mehrerer Messeinrichtungen) der Produktionsanlage 1. Die Schnittstelle kann auf einer drahtgebundenen und/oder drahtlosen (beispielsweise auf zellularem Mobilfunk (z.B. GSM, E-GSM, UMTS, LTE, 5G) oder auf WLAN (Wireless Local Area Network)) beruhen.

Die Benutzerschnittstelle 56 kann als Bildschirm und Tastatur und/oder als berührungsempfindliche Anzeige (Touchscreen) ausgestaltet sein. Die Benutzerschnittstelle 56 kann direkt (beispielsweise drahtgebunden) mit Prozessor 50 und/oder der Steuervorrichtung 200 verbunden sein, und/oder (es können mehrere Benutzerschnittstellen 56 vorgesehen sein) über eine drahtgebundene und/oder drahtlose (z.B. auf GSM, E-GSM, UMTS, LTE, 5G und/oder auf WLAN (Wireless Local Area Network) Technologie beruhende) Kommunikationsverbindung, beispielsweise eine Internetverbindung umfassende Kommunikationsverbindung mit Prozessor 50 und/oder der Steuervorrichtung 200 verbunden sein. Im letzteren Fall kann so eine Remoteverbindung zur Steuervorrichtung 200 ermöglicht werden, die es beispielsweise einem Benutzer ermöglicht, aus der Ferne auf die Steuervorrichtung 200 zuzugreifen, und so ggf. mehrere Steuervorrichtungen 200 zu bedienen.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten oder dergleichen bedeutet im Zusammenhang dieser Spezifikation mehrere Einheiten oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen

## Patentansprüche

1. Verfahren (100) zum Ausgeben von Voraussagedaten einer Voraussage zumindest eines Qualitätsparameters für zumindest eine Baustoffplatte, wobei das Verfahren (100) durch zumindest eine Steuervorrichtung (100) einer Produktionsanlage (1) zum Herstellen von Baustoffplatten ausgeführt wird,
- wobei die Produktionsanlage (1) zumindest einen Sensor und/oder eine Messeinrichtung aufweist, der und/oder die eingerichtet ist/sind, zumindest einen Sensormesswert und/oder einen Messwert der Messeinrichtung als Soll- oder Istwert eines entsprechenden Prozessparametes auszugeben, der eine entsprechende Prozessbedingung beim Herstellen der Baustoffplatte durch die Produktionsanlage charakterisiert, wobei das Verfahren (100) umfasst:
- Bereithalten (101) eines mathematischen Modells für eine Verwendung beim Herstellen zumindest einer Baustoffplatte, wobei das mathematische Modell einen Satz von Modellkoeffizienten für eine oder mehrere mathematische Gleichungen umfasst, wobei die eine mathematische Gleichung oder die mehreren mathematischen Gleichungen basierend auf einer Eingabe von Werten aus zumindest einem Prozessparameterdatensatz, der Werte für Prozessparameter mit zugehörigem Zeitstempel umfasst, einen zu erwartenden Wert für zumindest einen Qualitätsparameter ausgeben kann oder können, und wobei das mathematische Modell auf einer Anzahl von Trainingsdatensätzen basiert, die einer Mindestanzahl entspricht, oder die größer als diese Mindestanzahl ist;
- wobei die Mindestanzahl einer Anzahl von Trainingsdatensätzen entspricht, für die das mathematische Modell einen Voraussagewert für zumindest einen Qualitätsparameter ausgeben kann, wenn das mathematische Modell basierend auf dieser Anzahl von Trainingsdatensätzen trainiert und/oder erzeugt wurde, wobei eine Güte des Voraussagewerts ein vorbestimmtes Qualitätskriterium erfüllt;
- wobei ein Trainingsdatensatz für einen Baustoffplattentyp Qualitätsparameterdaten umfasst, die zumindest einen Wert für zumindest ein entsprechendes Qualitätsmerkmal einer Baustoffplattenprobe des Baustoffplattentyps repräsentieren, und Prozessparameterdaten, die Werte für eine Mehrzahl von Prozessparametern eines Produktionsverfahrens zum Herstellen der Baustoffplattenprobe repräsentieren;
- wobei die Anzahl von Trainingsdatensätzen zumindest einen Trainingsdatensatz für einen Baustoffplattentyp der zumindest einen Baustoffplatte umfasst, und zumindest einen Trainingsdatensatz für zumindest einen anderen Baustoffplattentyp, wobei das Verfahren weiter umfasst:
- Erhalten (102) von Voraussagedaten basierend auf dem mathematischen Modell und basierend auf zumindest einem Sensormesswert und/oder zumindest einem Messwert der Messeinrichtung, wobei die Voraussagedaten eine Voraussage zumindest eines Qualitätsparameters für die zumindest eine Baustoffplatte repräsentieren;
- wobei das Erhalten der Voraussagedaten umfasst:
- Verwenden des zumindest einen erhaltenen Sensormesswerts und/oder des zumindest einen erhaltenen Messwerts der Messeinrichtung als Eingangsgröße oder als Eingangsgrößen für das mathematische Modell, und
- Berechnen der Voraussagedaten mittels des mathematischen Modells basierend auf der Eingangsgröße oder den Eingangsgrößen;
- wobei das mathematische Modell auf einer Anzahl von Trainingsdatensätzen für den Baustoffplattentyp der zumindest einen Baustoffplatte basiert, und zumindest auf einer Anzahl von Trainingsdatensätzen für den anderen Baustoffplattentyp, wobei die Anzahl von Trainingsdatensätzen für den Baustoffplattentyp der zumindest einen Baustoffplatte kleiner ist als die Mindestanzahl;
- wobei eine Summe der Anzahl von Trainingsdatensätzen für den Baustoffplattentyp der zumindest einen Baustoffplatte und der Anzahl von Trainingsdatensätzen für den anderen Baustoffplattentyp einer Anzahl entspricht, die gleich oder größer ist als die Mindestanzahl; und
wobei das Verfahren weiter umfasst:
- Ausgeben (103) der Voraussagedaten.

2. Das Verfahren (100) gemäß Anspruch 1, wobei ein Produktionsanteil an einer Gesamtproduktionsmenge von Baustoffplatten des Baustoffplattentyps der zumindest einen Baustoffplatte gleich oder geringer ist, als ein Produktionsanteil von Baustoffplatten des anderen Baustoffplattentyps.

3. Das Verfahren (100) gemäß einem der Ansprüche 1 oder 2, wobei das mathematische Modell auf einer Anzahl von Trainingsdatensätzen für den Baustoffplattentyp der zumindest einen Baustoffplatte basiert, und zumindest auf einer Anzahl von Trainingsdatensätzen für den anderen Baustoffplattentyp, wobei die Anzahl von Trainingsdatensätzen für den Baustoffplattentyp der zumindest einen Baustoffplatte kleiner ist als die Anzahl der Baustoffplatten des anderen Baustoffplattentyps.

4. Das Verfahren (100) gemäß einem der Ansprüche 1 bis 3, wobei für den Baustoffplattentyp der zumindest einen Baustoffplatte und für den zumindest einen anderen Baustoffplattentyp ein Wert einer Differenz zwischen zumindest einem Parameterwert, der eine Eigenschaft des Baustoffplattentyps der zumindest einen Baustoffplatte charakterisiert, und zumindest einem entsprechenden Parameterwert, der die entsprechende Eigenschaft des zumindest einen anderen Baustoffplattentyps charakterisiert, gleich einem Maximalwert ist, oder diesen unterschreitet.

5. Das Verfahren (100) gemäß einem der Ansprüche 1 bis 4, wobei eine Eigenschaft eines Baustoffplattentyps ausgewählt ist zumindest aus:
- Baustoffplattendicke;
- Baustoffplattenbreite;
- Baustoffplattendichte;
- Art einer Verleimung der Baustoffplatte;
- zumindest einem Material der Baustoffplatte, insbesondere zumindest einer Art eines Leims und/oder einer Art eines Holzmaterials.

6. Das Verfahren (100) nach einem der Ansprüche 1 bis 5, wobei die Mindestanzahl von Trainingsdatensätzen zwischen 20 und 100, zwischen 30 und 80, zwischen 35 und 70, oder zwischen 40 und 60, für die ein oder mehreren Qualitätsparameter liegt, für die basierend auf dem mathematischen Modell Voraussagedaten erhalten werden.

7. Das Verfahren (100) nach einem der Ansprüche 1 bis 6, weiter umfassend:
- Erhalten von Informationen, die den Baustoffplattentyp der zumindest einen Baustoffplatte repräsentieren;
- Bestimmen, basierend auf den erhaltenen Informationen, die den Baustoffplattentyp der zumindest einen Baustoffplatte repräsentieren, ob ein mathematisches Modell für die Verwendung beim Herstellen der zumindest einen Baustoffplatte vorhanden ist, das auf einer Anzahl von Trainingsdatensätzen basiert, die der Mindestanzahl entspricht, oder größer ist als die Mindestanzahl.

8. Das Verfahren (100) nach einem der Ansprüche 1 bis 7, weiter umfassend:
- Trainieren und/oder Erzeugen des mathematischen Modells für eine Verwendung beim Herstellen zumindest einer Baustoffplatte basierend auf der Anzahl von Trainingsdatensätzen, die der Mindestanzahl entspricht, oder die größer als diese Mindestanzahl ist.

9. Das Verfahren (100) nach einem der Ansprüche 1 bis 8, wobei ein Trainingsdatensatz weiter einen Zeitstempel umfasst und/oder eine Zuordnung zwischen dem Zeitstempel und dem Trainingsdatensatz besteht, wobei der Zeitstempel einen Zeitpunkt repräsentiert, zu dem die Baustoffplattenprobe hergestellt wurde, das Verfahren (100) weiter umfassend:
- Verwerfen von zumindest einem Trainingsdatensatz aus der Anzahl von Trainingsdatensätzen auf denen das mathematische Modell basiert, wenn der zumindest eine Trainingsdatensatz einen Zeitstempel umfasst und/oder diesem Zeitstempel zugeordnet ist, der einen Zeitpunkt repräsentiert, der vor einem vorbestimmten Zeitintervall liegt;
- Trainieren und/oder Erzeugen des mathematischen Modells für eine Verwendung beim Herstellen der zumindest einen Baustoffplatte basierend auf einer Anzahl von Trainingsdatensätzen, die den zumindest einen verworfenen Trainingsdatensatz nicht enthält.

10. Das Verfahren (100) nach einem der Ansprüche 1 bis 9, weiter umfassend:
- Erhalten von Informationen, die eine Aussage repräsentieren, dass zumindest ein Trainingsdatensatz vorhanden ist, der nicht von der Anzahl von Trainingsdatensätzen umfasst ist, auf denen das mathematische Modell basiert;
- Trainieren und/oder Erzeugen des mathematischen Modells basierend auf den Trainingsdatensätzen, die von der Anzahl von Trainingsdatensätzen umfasst sind, und basierend auf dem zumindest einen Trainingsdatensatz, der nicht von der Anzahl von Trainingsdatensätzen umfasst ist.

11. Das Verfahren (100) gemäß einem der Ansprüche 1 bis 10, wobei das Bereithalten des mathematischen Modells für die Verwendung beim Herstellen der Baustoffplatte umfasst:
- Erhalten von Prozessparameterauswahlinformationen, die eine Auswahl von Prozessparametern des Produktionsverfahrens zum Herstellen der zumindest einen Baustoffplatte repräsentieren und/oder von Informationen, die zumindest einen ausgewählten Qualitätsparameter, für den ein Wert für die zumindest eine Baustoffplatte durch das mathematische Modell vorausgesagt werden soll, repräsentieren;
- Trainieren und/oder Erzeugen des mathematischen Modells basierend auf der Auswahl von Prozessparametern und/oder für den zumindest einen ausgewählten Qualitätsparameter.

12. Das Verfahren (100) nach einem der Ansprüche 1 bis 11, weiter umfassend:
- Veranlassen einer Anzeige einer Repräsentation der Voraussage des zumindest einen Qualitätsparameters für die zumindest eine Baustoffplatte basierend auf den Voraussagedaten; und/oder
- Erzeugen von zumindest einem Steuersignal basierend auf den Voraussagedaten zum Steuern zumindest einer Komponente der Produktionsanlage (1) und/oder zum Einstellen zumindest eines Prozessparameters der Produktionsanlage (1) beim Herstellen der zumindest einen Baustoffplatte.

13. Das Verfahren (100) nach einem der Ansprüche 1 bis 12, wobei das mathematische Modell ein simultanes Gleichungsmodell umfasst, insbesondere ein auf dem Dreistufigen-Kleinste-Quadrate-Verfahren, basierendes mathematisches Modell, ein auf dem Zweistufigen-Kleinste-Quadrate-Verfahren ("Two-stage least squares", "2SLS") basierendes mathematisches Modell, ein auf dem Partial-Least-Squares (PLS) basierendes mathematisches Modell, und/oder ein lineares Regressionsmodell.

14. Steuervorrichtung (200) für eine Produktionsanlage (1) zum Herstellen von Baustoffplatten umfassend einen Prozessor (50), einen Programmspeicher (51), einen Arbeitsspeicher (52), einen Nutzdatenspeicher, eine oder mehrere Kommunikationsschnittellen (54), eine Erfassungseinheit (55) zur Erfassung von Ist- oder Sollwerten für einen oder mehrere Prozessparameter und eine Benutzerschnittstelle (56), wobei die Steuervorrichtung (200) eingerichtet ist zur Ausführung des Verfahrens (100) nach einem der Ansprüche 1-13.

15. Produktionsanlage (1) zum Herstellen von Baustoffplatten umfassend zumindest eine Steuervorrichtung (200) nach Anspruch 14, und einen Sensor und/oder eine Messeinrichtung, der und/oder die eingerichtet ist/sind, zumindest einen Sensormesswert und/oder einen Messwert der Messeinrichtung als Soll- oder Istwert eines entsprechenden Prozessparameters auszugeben.

16. Computerprogramm, umfassend Programmanweisungen, die eine Steuervorrichtung (200) gemäß Anspruch 14 zur Ausführung des Verfahrens (100) gemäß einem der Ansprüche 1-13 veranlassen, wenn das Computerprogramm auf dem Prozessor (50) der Steuervorrichtung (200) gemäß Anspruch 14 ausgeführt wird.

## Claims

1. A method (100) for outputting prediction data of a prediction of at least one quality parameter for at least one building material board, the method (100) being carried out by at least one control device (100) of a production plant (1) for producing building material boards,
- the production plant (1) having at least one sensor and/or one measuring device which is/are configured to output at least one sensor measurement value and/or one measured value of the measuring device as a setpoint or actual value of a corresponding process parameter which characterizes a corresponding process condition during the manufacture of the building material board by the production plant, the method (100) comprising:
- holding available (101) a mathematical model for use in manufacturing at least one building material board, the mathematical model comprising a set of model coefficients for one or more mathematical equations, wherein the one or more mathematical equations can output an expected value for at least one quality parameter based on an input of values from at least one process parameter data set, which comprises values for process parameters with associated timestamp, and wherein the mathematical model is based on a number of training data sets which corresponds to a minimum number or which is greater than this minimum number;
- wherein the minimum number corresponds to a number of training data sets for which the mathematical model can output a prediction value for at least one quality parameter when the mathematical model is trained and/or generated based on this number of training data sets, wherein a quality of the prediction value satisfies a predetermined quality criterion;
- wherein a training data set for a building material board type comprises quality parameter data representing at least one value for at least one corresponding quality characteristic of a building material board sample of the building material board type, and process parameter data representing values for a plurality of process parameters of a production process for producing the building material board sample;
- wherein the number of training data sets comprises at least one training data set for a building material board type of the at least one building material board, and at least one training data set for at least one other building material board type, the method further comprising:
- obtaining (102) prediction data based on the mathematical model and based on at least one sensor measurement value and/or at least one measured value of the measuring device, the prediction data representing a prediction of at least one quality parameter for the at least one building material board;
- wherein obtaining the prediction data comprises:
- using the at least one obtained sensor measurement value and/or the at least one obtained measured value of the measuring device as an input variable or as input variables for the mathematical model, and
- calculating the prediction data using the mathematical model based on the input variable or variables;
- wherein the mathematical model is based on a number of training data sets for the building material board type of the at least one building material board, and on at least a number of training data sets for the other building material board type, wherein the number of training data sets for the building material board type of the at least one building material board is smaller than the minimum number;
- wherein a sum of the number of training data sets for the building material board type of the at least one building material board and the number of training data sets for the other building material board type corresponds to a number that is equal to or greater than the minimum number; and
the method further comprising:
- outputting (103) the prediction data.

2. The method (100) according to claim 1, wherein a production share in a total production quantity of building material boards of the building material board type of the at least one building material board is equal to or less than a production share of building material boards of the other building material board type.

3. The method (100) according to one of claims 1 or 2, wherein the mathematical model is based on a number of training data sets for the building material board type of the at least one building material board, and at least a number of training data sets for the other building material board type, wherein the number of training data sets for the building material board type of the at least one building material board is smaller than the number of building material boards of the other building material board type.

4. The method (100) according to any one of claims 1 to 3, wherein, for the building material board type of the at least one building material board and for the at least one other building material board type, a value of a difference between at least one parameter value characterizing a property of the building material board type of the at least one building material board and at least one corresponding parameter value characterizing the corresponding property of the at least one other building material board type is equal to or less than a maximum value.

5. The method (100) according to any one of claims 1 to 4, wherein a property of a building material board type is selected at least from:
- building material board thickness;
- building material board width;
- building material board density;
- type of gluing of the building material board;
- at least one material of the building material board, in particular at least one type of glue and/or one type of wood material.

6. The method (100) according to any one of claims 1 to 5, wherein the minimum number of training data sets is between 20 and 100, between 30 and 80, between 35 and 70, or between 40 and 60, for the one or more quality parameters for which prediction data is obtained based on the mathematical model.

7. The method (100) according to any one of claims 1 to 6, further comprising:
- obtaining information representing the building material board type of the at least one building material board;
- determining, based on the obtained information representing the building material board type of the at least one building material board, whether there is a mathematical model for use in manufacturing the at least one building material board based on a number of training data sets equal to or greater than the minimum number.

8. The method (100) according to any one of claims 1 to 7, further comprising:
- training and/or generating the mathematical model for use in manufacturing at least one building material board based on the number of training data sets equal to or greater than the minimum number.

9. The method (100) according to any one of claims 1 to 8, wherein a training data set further comprises a timestamp and/or there is an association between the timestamp and the training data set, wherein the timestamp represents a point in time at which the building material board sample was produced, the method (100) further comprising:
- discarding at least one training dataset from the number of training datasets on which the mathematical model is based if the at least one training dataset comprises and/or is associated with a timestamp representing a point in time prior to a predetermined time interval;
- training and/or generating the mathematical model for use in manufacturing the at least one building material board based on a number of training data sets which does not include the at least one discarded training data set.

10. The method (100) according to any one of claims 1 to 9, further comprising:
- obtaining information representing a statement that at least one training data set is present that is not included in the number of training data sets on which the mathematical model is based;
- training and/or generating the mathematical model based on the training data sets included in the number of training data sets and based on the at least one training data set not included in the number of training data sets.

11. The method (100) according to any one of claims 1 to 10, wherein providing the mathematical model for use in manufacturing the building material board comprises:
- obtaining process parameter selection information representing a selection of process parameters of the production method for manufacturing the at least one building material board and/or information re-representing at least one selected quality parameter for which a value for the at least one building material board is to be predicted by the mathematical model;
- training and/or generating the mathematical model based on the selection of process parameters and/or for the at least one selected quality parameter.

12. The method (100) according to any one of claims 1 to 11, further comprising:
- causing a display of a representation of the prediction of the at least one quality parameter for the at least one building material board based on the prediction data; and/or
- generating at least one control signal based on the prediction data for controlling at least one component of the production plant (1) and/or for adjusting at least one process parameter of the production plant (1) during production of the at least one building material board.

13. The method (100) according to any one of claims 1 to 12, wherein the mathematical model comprises a simultaneous equation model, in particular a mathematical model based on the three-stage least squares method, a mathematical model based on the two-stage least squares method ("2SLS"), a mathematical model based on the partial least squares (PLS), and/or a linear regression model.

14. A control device (200) for a production plant (1) for manufacturing building material boards, comprising a processor (50), a program memory (51), a working memory (52), a user data memory, one or more communication interfaces (54), a detection unit (55) for detecting actual or setpoint values for one or more process parameters and a user interface (56), the control device (200) being set up for carrying out the method (100) according to one of claims 1-13.

15. A production plant (1) for producing building material boards, comprising at least one control device (200) according to claim 14, and a sensor and/or a measuring device which is/are configured to output at least one sensor measurement value and/or a measured value of the measuring device as a setpoint or actual value of a corresponding process parameter.

16. A computer program comprising program instructions that cause a control device (200) according to claim 14 to execute the method (100) according to any one of claims 1-13 when the computer program is executed on the processor (50) of the control device (200) according to claim 14.

## Revendications

1. Procédé (100) pour générer des données prévisionnelles d'une prévision concernant au moins un paramètre de qualité pour au moins un panneau de matériau de construction, dans lequel le procédé (100) est mis en œuvre par au moins un dispositif de commande (100) d'une installation de production (1) destinée à fabriquer des panneaux de matériau de construction,
- dans lequel l'installation de production (1) comporte au moins un capteur et/ou un dispositif de mesure qui est et/ou qui sont conçus pour générer au moins une valeur mesurée de capteur et/ou une valeur mesurée du dispositif de mesure en tant que valeur de consigne ou valeur réelle d'un paramètre de processus correspondant qui caractérise une condition de processus correspondante lors de la fabrication du panneau de matériau de construction par l'installation de production, dans lequel le procédé (100) comprend de :
- fournir (101) un modèle mathématique destiné à être utilisé lors de la fabrication d'au moins un panneau de matériau de construction, dans lequel le modèle mathématique comprend un ensemble de coefficients de modèle pour une ou plusieurs équations mathématiques, dans lequel l'équation mathématique ou les équations mathématiques peut ou peuvent générer, sur la base d'une entrée de valeurs provenant d'au moins un ensemble de données de paramètres de processus qui comprend des valeurs pour des paramètres de processus ayant un horodatage associé, une valeur attendue pour au moins un paramètre de qualité, et dans lequel le modèle mathématique est basé sur un nombre d'ensembles de données d'apprentissage qui correspond à un nombre minimal ou qui est supérieur à ce nombre minimal,
- dans lequel le nombre minimal correspond à un nombre d'ensembles de données d'apprentissage pour lesquels le modèle mathématique peut générer une valeur prévisionnelle pour au moins un paramètre de qualité lorsque le modèle mathématique a été entraîné et/ou généré sur la base de ce nombre d'ensembles de données d'apprentissage, dans lequel une qualité de la valeur prévisionnelle satisfait à un critère de qualité prédéterminé,
- dans lequel un ensemble de données d'apprentissage pour un type de panneau de matériau de construction comprend des données de paramètre de qualité qui représentent au moins une valeur pour au moins une caractéristique de qualité correspondante d'un échantillon de panneau de matériau de construction du type de panneau de matériau de construction, et des données de paramètres de processus qui représentent des valeurs pour une pluralité de paramètres de processus d'un procédé de production destiné à fabriquer l'échantillon de panneau de matériau de construction,
- dans lequel le nombre d'ensembles de données d'apprentissage comprend au moins un ensemble de données d'apprentissage pour un type de panneau de matériau de construction du au moins un panneau de matériau de construction, et au moins un ensemble de données d'apprentissage pour au moins un autre type de panneau de matériau de construction, dans lequel le procédé comprend en outre de :
- obtenir (102) des données prévisionnelles sur la base du modèle mathématique et sur la base d'au moins une valeur mesurée de capteur et/ou d'au moins une valeur mesurée du dispositif de mesure, dans lequel les données prévisionnelles représentent une prévision concernant au moins un paramètre de qualité pour le au moins un panneau de matériau de construction,
- dans lequel l'obtention des données prévisionnelles comprend de :
- utiliser la au moins une valeur mesurée de capteur obtenue et/ou la au moins une valeur mesurée obtenue du dispositif de mesure comme grandeur d'entrée ou comme grandeurs d'entrée pour le modèle mathématique, et
- calculer les données prévisionnelles au moyen du modèle mathématique sur la base de la grandeur d'entrée ou des grandeurs d'entrée,
- dans lequel le modèle mathématique est basé sur un nombre d'ensembles de données d'apprentissage pour le type de panneau de matériau de construction du au moins un panneau de matériau de construction, et sur au moins un nombre d'ensembles de données d'apprentissage pour l'autre type de panneau de matériau de construction, dans lequel le nombre d'ensembles de données d'apprentissage pour le type de panneau de matériau de construction du au moins un panneau de matériau de construction est inférieur au nombre minimal,
- dans lequel une somme du nombre d'ensembles de données d'apprentissage pour le type de panneau de matériau de construction du au moins un panneau de matériau de construction, et du nombre d'ensembles de données d'apprentissage pour l'autre type de panneau de matériau de construction correspond à un nombre qui est égal ou supérieur au nombre minimal, et
dans lequel le procédé comprend en outre de :
- générer (103) les données prévisionnelles.

2. Procédé (100) selon la revendication 1, dans lequel une part de production d'une quantité totale de production de panneaux de matériau de construction du type de panneau de matériau de construction du au moins un panneau de matériau de construction est égale ou inférieure à une part de production de panneaux de matériau de construction de l'autre type de panneau de matériau de construction.

3. Procédé (100) selon l'une des revendications 1 ou 2, dans lequel le modèle mathématique est basé sur un nombre d'ensembles de données d'apprentissage pour le type de panneau de matériau de construction du au moins un panneau de matériau de construction, et sur au moins un nombre d'ensembles de données d'apprentissage pour l'autre type de panneau de matériau de construction, dans lequel le nombre d'ensembles de données d'apprentissage pour le type de panneau de matériau de construction du au moins un panneau de matériau de construction est inférieur au nombre de panneaux de matériau de construction de l'autre type de panneau de matériau de construction.

4. Procédé (100) selon l'une des revendications 1 à 3, dans lequel pour le type de panneau de matériau de construction du au moins un panneau de matériau de construction et pour le au moins un autre type de panneau de matériau de construction, une valeur d'une différence entre au moins une valeur de paramètre qui caractérise une propriété du type de panneau de matériau de construction du au moins un panneau de matériau de construction, et au moins une valeur de paramètre correspondante qui caractérise la propriété correspondante du au moins un autre type de panneau de matériau de construction, est égale à une valeur maximale ou inférieure à celle-ci.

5. Procédé (100) selon l'une des revendications 1 à 4, dans lequel une propriété d'un type de panneau de matériau de construction est choisie parmi au moins :
- une épaisseur du panneau de matériau de construction,
- une largeur du panneau de matériau de construction,
- une densité de panneau de matériau de construction,
- un type d'encollage du panneau de matériau de construction,
- au moins un matériau du panneau de matériau de construction, en particulier au moins un type de colle et/ou un type de produit ligneux.

6. Procédé (100) selon l'une des revendications 1 à 5, dans lequel le nombre minimal d'ensembles de données d'apprentissage est compris entre 20 et 100, entre 30 et 80, entre 35 et 70 ou entre 40 et 60, pour lesquels il existe un ou plusieurs paramètres de qualité pour lesquels des données prévisionnelles sont obtenues sur la base du modèle mathématique.

7. Procédé (100) selon l'une des revendications 1 à 6, comprenant en outre de :
- obtenir des informations qui représentent le type de panneau de matériau de construction du au moins un panneau de matériau de construction,
- déterminer, sur la base des informations obtenues qui représentent le type de panneau de matériau de construction du au moins un panneau de matériau de construction, s'il existe un modèle mathématique destiné à être utilisé pour la fabrication du au moins un panneau de matériau de construction, qui est basé sur un nombre d'ensembles de données d'apprentissage qui correspond au nombre minimal ou qui est supérieur au nombre minimal.

8. Procédé (100) selon l'une des revendications 1 à 7, comprenant en outre de :
- entraîner et/ou générer le modèle mathématique destiné à être utilisé pour la fabrication d'au moins un panneau de matériau de construction sur la base du nombre d'ensembles de données d'apprentissage qui correspond au nombre minimal ou qui est supérieur à ce nombre minimal.

9. Procédé (100) selon l'une des revendications 1 à 8, dans lequel un ensemble de données d'apprentissage comprend en outre un horodatage et/ou une association entre l'horodatage et l'ensemble de données d'apprentissage, dans lequel l'horodatage représente un instant auquel l'échantillon de panneau de matériau de construction a été fabriqué, le procédé (100) comprenant en outre de :
- rejeter au moins un ensemble de données d'apprentissage parmi le nombre d'ensembles de données d'apprentissage sur lesquels repose le modèle mathématique, lorsque le au moins un ensemble de données d'apprentissage comprend un horodatage et/ou est associé à cet horodatage qui représente un instant situé avant un intervalle de temps prédéterminé,
- entraîner et/ou générer le modèle mathématique destiné à être utilisé pour la fabrication du au moins un panneau de matériau de construction sur la base d'un nombre d'ensembles de données d'apprentissage qui ne contient pas le au moins un ensemble de données d'apprentissage rejeté.

10. Procédé (100) selon l'une des revendications 1 à 9, comprenant en outre de :
- obtenir des informations qui représentent une prévision selon laquelle il existe au moins un ensemble de données d'apprentissage qui n'est pas inclus dans le nombre d'ensembles de données d'apprentissage sur lesquels repose le modèle mathématique,
- entraîner et/ou générer le modèle mathématique sur la base des ensembles de données d'apprentissage qui sont inclus dans le nombre d'ensembles de données d'apprentissage et sur la base du au moins un ensemble de données d'apprentissage qui n'est pas inclus dans le nombre d'ensembles de données d'apprentissage.

11. Procédé (100) selon l'une des revendications 1 à 10, dans lequel la fourniture du modèle mathématique destiné à être utilisé pour la fabrication du panneau de matériau de construction comprend de :
- obtenir des informations de sélection de paramètres de processus qui représentent une sélection de paramètres de processus du procédé de production destiné à fabriquer le au moins un panneau de matériau de construction et/ou des informations qui représentent au moins un paramètre de qualité sélectionné pour lequel une valeur doit être prévue par le modèle mathématique pour le au moins un panneau de matériau de construction,
- entraîner et/ou générer le modèle mathématique sur la base de la sélection de paramètres de processus et/ou pour le au moins un paramètre de qualité sélectionné.

12. Procédé (100) selon l'une des revendications 1 à 11, comprenant en outre de :
- entraîner un affichage d'une représentation de la prévision du au moins un paramètre de qualité pour le au moins un panneau de matériau de construction sur la base des données prévisionnelles, et/ou
- générer au moins un signal de commande sur la base des données prévisionnelles afin de commander au moins un composant de l'installation de production (1) et/ou de régler au moins un paramètre de processus de l'installation de production (1) lors de la fabrication du au moins un panneau de matériau de construction.

13. Procédé (100) selon l'une des revendications 1 à 12, dans lequel le modèle mathématique comprend un modèle d'équations simultanées, en particulier un modèle mathématique basé sur la méthode des moindres carrés à trois étapes, un modèle mathématique basé sur la méthode des moindres carrés à deux étapes ("moindres carrés à deux étapes", "2SLS"), un modèle mathématique basé sur les moindres carrés partiels (PLS) et/ou un modèle de régression linéaire.

14. Dispositif de commande (200) pour une installation de production (1) destinée à fabriquer des panneaux de matériau de construction, comprenant un processeur (50), une mémoire de programme (51), une mémoire de travail (52), une mémoire de données utiles, une ou plusieurs interfaces de communication (54), une unité de détection (55) pour détecter des valeurs de consigne ou des valeurs réelles pour un ou plusieurs paramètres de processus, et une interface utilisateur (56), dans lequel le dispositif de commande (200) est configuré pour mettre en œuvre le procédé (100) selon l'une des revendications 1 à 13.

15. Installation de production (1) destinée à fabriquer des panneaux de matériau de construction, comprenant au moins un dispositif de commande (200) selon la revendication 14, et un capteur et/ou un dispositif de mesure, qui est et/ou qui sont configurés pour générer au moins une valeur mesurée de capteur et/ou une valeur mesurée du dispositif de mesure en tant que valeur de consigne ou valeur réelle d'un paramètre de processus correspondant.

16. Programme informatique, comprenant des instructions de programme qui amènent un dispositif de commande (200) selon la revendication 14 à mettre en œuvre le procédé (100) selon l'une des revendications 1 à 13, lorsque le programme informatique est exécuté sur le processeur (50) du dispositif de commande (200) selon la revendication 14.
